# EUROPEAN PATENT APPLICATION

(11) **EP 4 301 057 A1**
(43) Date of publication of application: **03.01.2024**
(21) Application number: 22778490.7
(22) Date of filing: 08.03.2022
(51) Int. Cl.: H04W 64/00

(54) **COMMUNICATION METHOD AND APPARATUS**

(30) Priority: 31.03.2021 CN 202110349468
(71) Applicant: Huawei Technologies Co., Ltd., Shenzhen, Guangdong 518129 (CN)
(72) Inventor: HAO, Jinping, Shenzhen, Guangdong 518129 (CN); JIN, Yinghao, Shenzhen, Guangdong 518129 (CN)
(74) Representative: MERH-IP Matias Erny Reichl Hoffmann Patentanwälte PartG mbB
(86) International application number: PCT/CN2022/079724
(87) International publication number: WO 2022/206306

(57) **Abstract**

Embodiments of this application relate to the field of wireless communication technologies, and provide a communication method and apparatus, to improve accuracy of a positioning result and reduce a waste of resources of a network device. In the method, the network device may receive a positioning information request from a positioning server. The positioning information request may be used to request the network device to configure uplink positioning reference signal configuration information for a terminal device. The network device may send the uplink positioning reference signal configuration information and neighboring cell information to the positioning server. The neighboring cell information may include an identifier of one or more first neighboring cells and/or a measurement result of a measurement quantity corresponding to the one or more first neighboring cells. The first neighboring cell is a neighboring cell of the terminal device.

## Description

### CROSS-REFERENCE TO RELATED APPLICATIONS

This application claims priority to Chinese Patent Application No. 202110349468.1, filed with the China National Intellectual Property Administration on March 31, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

Currently, when uplink positioning is performed on user equipment (user equipment, UE), a serving access network device determines configuration information of an uplink reference signal (sounding reference signal, SRS) for the UE, and sends the configuration information of the SRS to the UE and a location management function network element (location management function, LMF). The LMF may select a measurement access network device, and send a measurement request message to the measurement access network device, and the measurement request message carries the configuration information of the SRS. The UE may send the SRS based on the configuration information of the SRS. The measurement access network device may measure the SRS sent by the UE, and report a measurement result to the LMF. The LMF determines location information of the UE.

How to improve accuracy of a positioning result is a problem worth considering.

### SUMMARY

Embodiments of this application provide a communication method and apparatus, to improve accuracy of a positioning result.

According to a first aspect, a communication method is provided. The method may be performed by a network device or a chip with similar functions in the network device. In the method, the network device may receive a positioning information request from a positioning server. The positioning information request may be used to request the network device to configure and send an uplink positioning reference signal for a terminal device, for example, an SRS or a positioning SRS (positioning SRS). The network device may send uplink positioning reference signal configuration information and neighboring cell information to the positioning server. The neighboring cell information may include an identifier of one or more first neighboring cells and/or a measurement result of a measurement quantity corresponding to the one or more first neighboring cells. The first neighboring cell is a neighboring cell of the terminal device.

Based on the foregoing solution, the positioning server may learn of the neighboring cell information of the terminal device, to select, based on the neighboring cell information, a cell in which the uplink positioning reference signal of the terminal device can be better received as a cell that participates in measurement, thereby improving positioning efficiency and improving accuracy of a positioning result. Further, a problem of resource waste caused by an unnecessary cell participating in positioning may be further reduced.

In a possible implementation, the measurement quantity includes one or more of the following: reference signal received power (reference signal receiving power, RSRP) of a synchronization signal block (synchronization signal and PBCH block, SSB), reference signal received quality (reference signal receiving quality, RSRQ) of an SSB, RSRP of a channel state information-reference signal (channel state information-reference signal, CSI-RS), RSRQ of a CSI-RS, RSRP of a downlink positioning reference signal (positioning reference signal, PRS), or RSRQ of a PRS. Optionally, the measurement quantity may further include a measurement quantity of another downlink signal, for example, a measurement quantity of a cell-specific reference signal (cell-specific reference signals, CRS). In addition, the measurement quantity may further include another measurement quantity of the downlink signal, for example, a signal to interference plus noise ratio (signal to interference plus noise ratio, SINR). This is not specifically limited in this application.

Based on the foregoing solution, the positioning server may learn of the measurement result of the measurement quantity of the neighboring cell from the terminal device. Therefore, the positioning server may determine, based on the measurement result of the measurement quantity of the neighboring cell from the terminal device, the cell in which the uplink positioning reference signal of the terminal device can be better received as the cell that participates in the measurement.

In a possible implementation, the measurement result of the measurement quantity corresponding to the first neighboring cell may be greater than or equal to a first threshold.

Based on the foregoing solution, the network device may send, to the positioning server, an identifier of a neighboring cell, in the neighboring cells of the terminal device, whose measurement result of a measurement quantity is greater than or equal to the first threshold, and does not need to send identifiers of all neighboring cells of the terminal device to the positioning server. Therefore, resource overheads can be reduced.

In a possible implementation, the network device may send updated neighboring cell information to the positioning server.

Based on the foregoing solution, when the neighboring cell information of the terminal device changes, the network device may send the updated neighboring cell information to the positioning server in a timely manner, so that the positioning server can learn of the change of the neighboring cell information, and reselect a cell in which the uplink positioning reference signal of the terminal device can be better received as a cell that participates in measurement.

In a possible implementation, when a first condition is met, the network device may send the updated neighboring cell information to the positioning server. The first condition may include at least one of the following: a measurement result of a measurement quantity corresponding to at least one first neighboring cell in the identifiers of the one or more first neighboring cells changes, a change of a measurement result of a measurement quantity corresponding to at least one first neighboring cell in the identifiers of the one or more first neighboring cells is greater than or equal to a second threshold, the neighboring cell of the terminal device changes, the uplink positioning reference signal configuration information of the terminal device changes, or a measurement result of a measurement quantity corresponding to at least one first neighboring cell in the identifiers of the one or more first neighboring cells is less than a fifth threshold.

Based on the foregoing solution, when the first condition is met, the network device may send the updated neighboring cell information to the positioning server, so that a problem of a positioning failure caused by frequent updating of the neighboring cell information can be reduced, and a success rate of a positioning service can be improved.

In a possible implementation, the positioning information request may include first information. The first information may be used to request the network device to report the neighboring cell information of the terminal device.

Based on the foregoing solution, the network device may report the neighboring cell information of the terminal device to the positioning server based on the request of the positioning server, so that flexibility of obtaining and reporting the neighboring cell information can be improved, and a problem of resource waste caused by frequent reporting of the neighboring cell information by the network device to the positioning server can be reduced.

According to a second aspect, a communication method is provided. The method may be executed by a positioning server, or may be executed by a chip with similar functions in the network device. In the method, the positioning server may send a positioning information request to the first network device. The positioning information request may be used to request the network device to configure uplink positioning reference signal configuration information for a terminal device. The positioning server may receive neighboring cell information from the first network device. The neighboring cell information may include an identifier of one or more first neighboring cells and/or a measurement result of a measurement quantity corresponding to the one or more first neighboring cells. The first neighboring cell may be a neighboring cell of the terminal device.

Based on the foregoing solution, the positioning server may receive the neighboring cell information reported by the network device, to learn of the neighboring cell information of the terminal device. The positioning server may select, based on the neighboring cell information, a cell in which an uplink positioning reference signal reported by the terminal device can be better received as a cell that participates in measurement, so that positioning efficiency can be improved, accuracy of a positioning result can be improved, and a problem of resource waste caused by an unnecessary cell participating in positioning can be reduced.

In a possible implementation, the measurement quantity may include one or more of the following: reference signal received power RSRP of an SSB, RSRQ of an SSB, RSRP of a CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

Based on the foregoing solution, the positioning server may learn of the measurement result of the measurement quantity of the neighboring cell from the terminal device. Therefore, the positioning server may determine, based on the measurement result of the measurement quantity of the neighboring cell, the cell in which the uplink positioning reference signal of the terminal device can be received as the cell that participates in the measurement.

In a possible implementation, the measurement result of the measurement quantity corresponding to the first neighboring cell may be greater than or equal to a first threshold.

Based on the foregoing solution, the network device may send, to the positioning server, an identifier of a neighboring cell, in the neighboring cells of the terminal device, whose measurement result of a measurement quantity is greater than or equal to the first threshold, and does not need to send identifiers of all neighboring cells of the terminal device to the positioning server. Therefore, resource overheads can be reduced.

In a possible implementation, the positioning server may send a measurement request to a network device that manages one or more second neighboring cells. The measurement request is used to request the network device that manages the one or more second neighboring cells to measure an uplink reference signal of the terminal device. The one or more second neighboring cells are some or all of the one or more first neighboring cells.

Based on the foregoing solution, the positioning server may select, from the neighboring cells of the terminal device, a cell that the uplink positioning reference signal of the terminal device can be better measured as a cell that participates in measurement, so that accuracy of a positioning result can be improved, a probability of a positioning failure can be reduced, and a success rate of a positioning service can be improved.

In a possible implementation, a measurement result of a measurement quantity of the one or more second neighboring cells may be greater than or equal to a third threshold.

Based on the foregoing solution, the positioning server may select, from the neighboring cells of the terminal device, a cell whose measurement result is greater than or equal to the third threshold as a cell that participates in measurement, and may determine that the uplink positioning reference signal of the terminal device can be better received and measured in the cell that participates in measurement.

In a possible implementation, the positioning server may receive updated neighboring cell information from the first network device. The positioning server may send, based on the updated neighboring cell information, a measurement request to an updated network device that manages the one or more second neighboring cells.

Based on the foregoing solution, the positioning server can learn of a change of the neighboring cell information, and reselect a cell in which the uplink positioning reference signal of the terminal device can be better received as a cell that participates in measurement.

In a possible implementation, the positioning server may send first information to the network device. The first information may be used to request the network device to report the neighboring cell information of the terminal device. Optionally, the first information may be carried in a positioning information request (positioning information request) message.

Based on the foregoing solution, the positioning server may request, by using the first information, the network device to report the neighboring cell information of the terminal device, so that flexibility of obtaining and reporting the neighboring cell information can be improved, and a problem of resource waste caused by frequent reporting of the neighboring cell information by the network device to the positioning server can be reduced.

According to a third aspect, a communication method is provided. The method may be performed by a terminal device or a chip with similar functions in the terminal device. In the method, the terminal device may send a first request message to a positioning server. The first request message may be used to request positioning assistance information, and the first request message may include neighboring cell information. The first request message may be a request assistance data (request assistance data) message, or a 3^{rd} generation partnership project (3^{rd} generation partnership project, 3GPP) release 16 and a newly-defined message that does not appear before release 16. The neighboring cell information may include an identifier of one or more first neighboring cells and/or a measurement result of a measurement quantity corresponding to the one or more first neighboring cells. The first neighboring cell is a neighboring cell of the terminal device. The terminal device may receive the positioning assistance information from the positioning server. The positioning assistance information may include configuration information of a downlink positioning reference signal of one or more second neighboring cells. The one or more second neighboring cells may be some or all of the one or more first neighboring cells.

Based on the foregoing solution, the terminal device may report the neighboring cell information of the terminal device to the positioning server, so that the positioning server can select, based on the neighboring cell information, a cell in which the terminal device can better receive the downlink positioning reference signal, and send positioning reference signal configuration information and the like of the cell as the positioning assistance information to the terminal device for measurement. Therefore, positioning efficiency can be improved, accuracy of a positioning result can be improved, and a problem of resource waste caused by an unnecessary cell participating in positioning can be reduced.

In a possible implementation, the measurement quantity may include one or more of the following: RSRP of an SSB, RSRQ of an SSB, RSRP of a CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

Based on the foregoing solution, the positioning server may learn of the measurement result of the measurement quantity of the neighboring cell from the terminal device. Therefore, the positioning server may determine a cell in which the terminal device can better receive the downlink positioning reference signal, and send positioning reference signal configuration information and the like of the cell as the positioning assistance information to the terminal device for measurement, thereby improving positioning efficiency.

In a possible implementation, the measurement result of the measurement quantity corresponding to the first neighboring cell may be greater than or equal to a first threshold.

Based on the foregoing solution, the terminal device may report, to the positioning server, an identifier of a neighboring cell whose measurement result is greater than or equal to the first threshold, and does not need to report identifiers of all neighboring cells of the terminal device to the positioning server. Therefore, resource overheads can be reduced.

In a possible implementation, a measurement result that is of a measurement quantity of the one or more second neighboring cells and that is included in the positioning assistance information may be greater than or equal to a second threshold.

Based on the foregoing solution, the positioning server may select, from a plurality of neighboring cells of the terminal device, a cell whose measurement result is greater than or equal to the second threshold, and send positioning reference signal configuration information of the cell as positioning assistance information to the terminal device for measurement, thereby improving positioning efficiency.

In a possible implementation, the terminal device measures the downlink positioning reference signal of the one or more second neighboring cells based on the configuration information of the downlink positioning reference signal of the one or more second neighboring cells. The terminal device may send a measurement result of the downlink positioning reference signal of the one or more second neighboring cells to the positioning server.

Based on the foregoing solution, the terminal device may measure PRSs of the plurality of neighboring cells determined by the positioning server, and report the measurement result to the positioning server, so that the positioning server can obtain location information of the terminal device through processing.

In a possible implementation, the terminal device may receive information about one or more third neighboring cells from the positioning server. Optionally, the terminal device may receive a third request message from the positioning server. The third request message may be used to request the terminal device to perform measurement, and the third request message includes the information about one or more third neighboring cells. The third request message may be a request location information (request location information) message, or a newly-defined message. The one or more third neighboring cells are some or all of the one or more second neighboring cells. The terminal device measures a downlink positioning reference signal of the one or more third neighboring cells based on configuration information of a downlink reference signal of the one or more third neighboring cells. The terminal device may send a measurement result of the downlink positioning reference signal of the one or more third neighboring cells to the positioning server.

Based on the foregoing solution, the positioning server may also indicate the neighboring cell to the terminal device, so that the UE can further reduce searching and measuring a PRS of an unnecessary cell, thereby improving positioning efficiency, reducing UE consumption, and reducing a positioning delay.

According to a fourth aspect, a communication method is provided. The method may be executed by a positioning server, or may be executed by a chip with similar functions in the network device. In the method, the positioning server may receive a first request message from a terminal device. The first request message may be used to request positioning assistance information, and the first request message may include neighboring cell information. The neighboring cell information may include an identifier of one or more first neighboring cells and/or a measurement result of a measurement quantity corresponding to the one or more first neighboring cells. The first neighboring cell may be a neighboring cell of the terminal device. The positioning server may send the positioning assistance information to the terminal device. The positioning assistance information may include configuration information of a downlink positioning reference signal of one or more second neighboring cells. The one or more second neighboring cells are some or all of the one or more first neighboring cells.

Based on the foregoing solution, the positioning server may learn of the neighboring cell information of the terminal device, to select, based on the neighboring cell information, a cell in which the terminal device can better receive the downlink positioning reference signal as a cell that participates in measurement. This can improve positioning efficiency, improve accuracy of a positioning result, reduce searching and measuring, by the UE, a PRS of an unnecessary cell, thereby improving positioning efficiency, reducing UE consumption, and reducing a positioning delay.

In a possible implementation, the measurement quantity may include one or more of the following: RSRP of an SSB, RSRQ of an SSB, RSRP of a CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

Based on the foregoing solution, the positioning server may learn of the measurement result of the measurement quantity of the neighboring cell from the terminal device. Therefore, the positioning server may determine a cell in which the terminal device can better receive the downlink positioning reference signal, and send positioning reference signal configuration information and the like of the cell as the positioning assistance information to the terminal device for measurement, thereby improving positioning efficiency.

In a possible implementation, the measurement result of the measurement quantity corresponding to the first neighboring cell may be greater than or equal to a first threshold.

Based on the foregoing solution, the terminal device may report, to the positioning server, an identifier of a neighboring cell whose measurement result is greater than or equal to the first threshold, and does not need to report identifiers of all neighboring cells of the terminal device to the positioning server. Therefore, resource overheads can be reduced.

In a possible implementation, a measurement result that is of a measurement quantity of the one or more second neighboring cells and that is included in the downlink positioning assistance information may be greater than or equal to a second threshold.

Based on the foregoing solution, the positioning server may select, from a plurality of neighboring cells of the terminal device, a cell whose measurement result is greater than or equal to the second threshold, and send positioning reference signal configuration information of the cell as positioning assistance information to the terminal device for measurement, thereby improving positioning efficiency.

In a possible implementation, the positioning server may send a second request message to a network device that manages one or more second neighboring cells. The second request message may be used to request the network device that manages the one or more second neighboring cells to send a downlink positioning reference signal. The foregoing second request message may be a transmission reception point (transport reception point, TRP) information request (TRP information request) message, or may be a 3GPP release 16 and a-newly defined message that does not appear before release 16.

Optionally, the second request message may carry configuration information that is of the downlink positioning reference signal and that is recommended by the positioning server, so that the network device that manages the one or more second neighboring cells determines and sends a downlink reference signal based on the recommended configuration information. The positioning server may receive confirmation information of the downlink positioning reference signal from the network device that manages the one or more second neighboring cells, or the positioning server may receive the configuration information of the downlink positioning reference signal from the network device that manages the one or more second neighboring cells, and the positioning server may send the configuration information of the downlink positioning reference signal as the positioning assistance information to the terminal device. The positioning server may send a positioning measurement request to the terminal device, and may receive, from the terminal device, a measurement result of the downlink positioning reference signal of the network device that manages the one or more second neighboring cells. The positioning server may obtain location information of the terminal device through processing based on the measurement result of the downlink positioning reference signal.

Based on the foregoing solution, the terminal device may measure PRSs of the plurality of neighboring cells determined by the positioning server, and the positioning server may receive the measurement result reported by the terminal device, and obtain the location information of the terminal device through processing.

In a possible implementation, the positioning server may send information about one or more third neighboring cells to the terminal device. The one or more third neighboring cells are some or all of the one or more second neighboring cells. The one or more third neighboring cells may be a cell corresponding to one or more third neighboring cell identifiers that are carried in a third request message sent to the terminal device. The positioning server may receive a measurement result of a downlink positioning reference signal of the one or more third neighboring cells from the terminal device.

Based on the foregoing solution, the positioning server may also indicate, to the terminal device, a PRS of a neighboring cell that needs to be measured, thereby further reducing participating in measurement of an unnecessary cell, saving energy consumption of the terminal device, and reducing a waste of network resources.

According to a fifth aspect, a communication apparatus is provided. The communication apparatus may include modules/units configured to perform any one of the first aspect or the possible implementations of the first aspect, may further include modules/units configured to perform any one of the second aspect or the possible implementations of the second aspect, may further include modules/units configured to perform any one of the third aspect or the possible implementations of the third aspect, or may further include modules/units configured to perform any one of the fourth aspect or the possible implementations of the fourth aspect, for example, a processing unit and a transceiver unit.

For example, when the communication apparatus performs the method in any one of the first aspect or the possible implementations of the first aspect, the transceiver unit is configured to receive a positioning information request from a positioning server, where the positioning information request is used to request a network device to configure uplink positioning reference signal configuration information for a terminal device; the processing unit is configured to generate the uplink positioning reference signal configuration information and neighboring cell information based on the positioning information request, where the positioning cell information includes an identifier of one or more first neighboring cells and/or a measurement result of a measurement quantity corresponding to the one or more first neighboring cells, and the first neighboring cell is a neighboring cell of the terminal device; and the transceiver unit is configured to send the uplink positioning reference signal configuration information and the neighboring cell information.

In a design, the measurement quantity includes one or more of the following: reference signal received power RSRP of a synchronization signal block SSB, reference signal received quality RSRQ of an SSB, RSRP of a channel state information-reference signal CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

In a design, the measurement result of the measurement quantity corresponding to the first neighboring cell is greater than or equal to a first threshold.

In a design, the transceiver unit is further configured to send updated neighboring cell information to the positioning server.

In a design, when the transceiver unit sends the updated neighboring cell information to the positioning server, the transceiver unit is specifically configured to: when a first condition is met, send the updated neighboring cell information to the positioning server, where the first condition includes at least one of the following: a measurement result of a measurement quantity corresponding to at least one first neighboring cell in the identifiers of the one or more first neighboring cells changes, a change of a measurement result of a measurement quantity corresponding to at least one first neighboring cell in the identifiers of the one or more first neighboring cells is greater than or equal to a second threshold, the neighboring cell of the terminal device changes, the uplink positioning reference signal configuration information of the terminal device changes, or a measurement result of a measurement quantity corresponding to at least one first neighboring cell in the identifiers of the one or more first neighboring cells is less than a fifth threshold.

In a design, the positioning information request includes first information, and the first information is used to request the network device to report the neighboring cell information of the terminal device.

For example, when the communication apparatus performs the method in any one of the second aspect or the possible implementations of the second aspect, the processing unit is configured to generate a positioning information request, where the positioning information request is used to request a network device to configure uplink positioning reference signal configuration information for a terminal device; the transceiver unit is configured to send the positioning information request to a first network device; and the transceiver unit is further configured to receive neighboring cell information from the first network device, where the neighboring cell information includes an identifier of one or more first neighboring cells and/or a measurement result of a measurement quantity corresponding to the one or more first neighboring cells, and the first neighboring cell is a neighboring cell of the terminal device.

In a design, the measurement quantity includes one or more of the following: reference signal received power RSRP of a synchronization signal block SSB, reference signal received quality RSRQ of an SSB, RSRP of a channel state information-reference signal CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

In a design, the measurement result of the measurement quantity corresponding to the first neighboring cell is greater than or equal to a first threshold.

In a design, the transceiver unit is further configured to send a measurement request to a network device that manages one or more second neighboring cells, where the measurement request is used to request the network device that manages the one or more second neighboring cells to receive an uplink reference signal of the terminal device, and the one or more second neighboring cells are some or all of the one or more first neighboring cells.

In a design, a measurement result of a measurement quantity of the one or more second neighboring cells is greater than or equal to a third threshold.

In a design, the transceiver unit is further configured to receive updated neighboring cell information from the first network device; the processing unit is further configured to generate a measurement request based on the updated neighboring cell information; and the transceiver unit is further configured to send the measurement request to an updated network device that manages the one or more second neighboring cells.

In a design, the positioning information request includes first information, and the first information is used to request the network device to report the neighboring cell information of the terminal device.

For example, when the communication apparatus performs the method in any one of the third aspect or the possible implementations of the third aspect, the processing unit is configured to generate a first request message, where the first request message is used to request positioning assistance information, the first request message includes neighboring cell information, the neighboring cell information includes an identifier of one or more first neighboring cells and/or a measurement result of a measurement quantity corresponding to the one or more first neighboring cells, and the first neighboring cell is a neighboring cell of a terminal device; the transceiver unit is configured to send the first request message to a positioning server; and the transceiver unit is further configured to receive the positioning assistance information from the positioning server, where the positioning assistance information includes configuration information of a downlink positioning reference signal of one or more second neighboring cells, and the one or more second neighboring cells are some or all of the one or more first neighboring cells.

In a design, the measurement quantity includes one or more of the following: reference signal received power RSRP of a synchronization signal block SSB, reference signal received quality RSRQ of an SSB, RSRP of a channel state information-reference signal CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

In a design, the measurement result of the measurement quantity corresponding to the first neighboring cell is greater than or equal to a first threshold.

In a design, a measurement result that is of a measurement quantity of the one or more second neighboring cells and that is included in the positioning assistance information is greater than or equal to a second threshold.

In a design, the processing unit is further configured to measure the downlink positioning reference signal of the one or more second neighboring cells based on the configuration information of the downlink positioning reference signal of the one or more second neighboring cells; and the transceiver unit is further configured to send a measurement result of the downlink positioning reference signal of the one or more second neighboring cells to the positioning server.

In a design, before the processing unit measures the downlink positioning reference signal of the one or more second neighboring cells based on the configuration information of the downlink positioning reference signal of the one or more second neighboring cells, the transceiver unit is further configured to receive a third request message from the positioning server, where the third request message is used to request the apparatus to perform measurement, the third request message includes information about one or more third neighboring cells, and the one or more third neighboring cells are some or all of the one or more second neighboring cells; when the processing unit measures the downlink positioning reference signal of the one or more second neighboring cells based on the configuration information of the downlink positioning reference signal of the one or more second neighboring cells, the processing unit is specifically configured to measure a downlink positioning reference signal of the one or more third neighboring cells based on configuration information of a downlink reference signal of the one or more third neighboring cells; and when the transceiver unit sends a measurement result of the downlink positioning reference signal of the one or more second neighboring cells to the positioning server, the transceiver unit is specifically configured to send a measurement result of the downlink positioning reference signal of the one or more third neighboring cells to the positioning server.

For example, when the communication apparatus performs the method in any one of the fourth aspect or the possible implementations of the fourth aspect, the transceiver unit is configured to receive a first request message from a terminal device, where the first request message is used to request positioning assistance information, the first request message includes neighboring cell information, the neighboring cell information includes an identifier of one or more first neighboring cells and/or a measurement result of a measurement quantity corresponding to the one or more first neighboring cells, and the first neighboring cell is a neighboring cell of the terminal device; and the processing unit is configured to generate the positioning assistance information based on the first request message, where the positioning assistance information includes configuration information of a downlink positioning reference signal of one or more second neighboring cells, and the one or more second neighboring cells are some or all of the one or more first neighboring cells. The transceiver unit is further configured to send the positioning assistance information to the terminal device.

In a design, the measurement quantity includes one or more of the following: reference signal received power RSRP of a synchronization signal block SSB, reference signal received quality RSRQ of an SSB, RSRP of a channel state information-reference signal CSI-RS, RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

In a design, the measurement result of the measurement quantity corresponding to the first neighboring cell is greater than or equal to a first threshold.

In a design, a measurement result that is of a measurement quantity of the one or more second neighboring cells and that is included in the downlink positioning assistance information is greater than or equal to a second threshold.

In a design, the transceiver unit is further configured to send a second request message to a network device that manages the one or more second neighboring cells, where the second request message is used to request the network device that manages the one or more second neighboring cells to send a downlink positioning reference signal.

In a design, the transceiver unit is further configured to send information about one or more third neighboring cells to the terminal device, where the one or more third neighboring cells are some or all of the one or more second neighboring cells; and receive a measurement result of a downlink positioning reference signal of the one or more third neighboring cells from the terminal device.

According to a sixth aspect, a communication apparatus is provided. The communication apparatus includes a processor and a transceiver. The transceiver is configured to perform sending/receiving steps of the method in any one of the first aspect or the possible implementations of the first aspect, perform sending/receiving steps of the method in any one of the second aspect or the possible implementations of the second aspect, perform sending/receiving steps of the method in any one of the third aspect or the possible implementations of the third aspect, or perform sending/receiving steps of the method in any one of the fourth aspect or the possible implementations of the fourth aspect.

In a possible implementation, the foregoing communication apparatus further includes a memory. The memory is configured to store computer-executable instructions, and when a controller runs, the processor executes the computer-executable instructions in the memory to perform the methods in the foregoing aspects by using a hardware resource in the controller.

In a possible implementation, the memory may be located inside the foregoing apparatus, or the memory may be located outside the foregoing apparatus.

In a possible implementation, the memory may be integrated with the processor.

According to a seventh aspect, a communication system is provided. The communication system may include at least one network device and at least one positioning server. The at least one positioning server may perform the operation shown in the second aspect or the fourth aspect, and the at least one network device may perform the operation shown in the first aspect.

According to an eighth aspect, a computer-readable storage medium is provided. The computer-readable storage medium stores instructions. When the instructions are run on a computer, the computer is enabled to perform the method according to the foregoing aspect.

According to a ninth aspect, this application provides a computer program product for storing instructions. When the computer program product runs on a computer, the computer is enabled to perform the method in the foregoing aspect.

In addition, for beneficial effect of the fifth aspect to the ninth aspect, refer to the beneficial effect shown in the first aspect to the fourth aspect.

### BRIEF DESCRIPTION OF DRAWINGS

FIG. 1 is a schematic diagram of an uplink positioning method;
FIG. 2 is a schematic diagram of a location relationship between a serving cell and a neighboring cell of a terminal device;
FIG. 3 is a schematic diagram of a communication system according to an embodiment of this application;
FIG. 4 is a flowchart of an example of a communication method according to an embodiment of this application;
FIG. 5 is another schematic diagram of a location relationship between a serving cell and a neighboring cell of a terminal device according to an embodiment of this application;
FIG. 6 is a schematic diagram of a location relationship between a serving network device and a neighboring network device according to an embodiment of this application;
FIG. 7 is another flowchart of an example of a communication method according to an embodiment of this application;
FIG. 8 is still another flowchart of an example of a communication method according to an embodiment of this application;
FIG. 9 is a schematic diagram of a communication apparatus according to an embodiment of this application; and
FIG. 10 is another schematic diagram of a communication apparatus according to an embodiment of this application.

### DESCRIPTION OF EMBODIMENTS

A positioning service is one of important functions in an NR system. A 3^{rd} generation partnership project (3^{rd} generation partnership project, 3GPP) defines a plurality of positioning technologies, including an uplink positioning technology and a downlink positioning technology. The uplink positioning technology includes uplink relative time of arrival (up link-relative time of arrival, UL-RTOA) and uplink angle of arrival (up link-angle of arrival, UL-AOA). The downlink positioning technology includes downlink time difference of arrival (down link-time difference of arrival, DL-TDOA) and downlink angle of departure (down link-angle of departure, DL-AOD).

In the uplink positioning technology, a plurality of access network devices measures RTOA or AOA of an SRS signal of the UE to determine a location of the UE. In the downlink positioning technology, the TDOA technology determines a location of the UE by using differences (TDOA) between arrival time that is of downlink signals of a plurality of access network devices and that is measured by the UE and arrival time that is of a downlink signal of a reference access network device and that is measured by the UE.

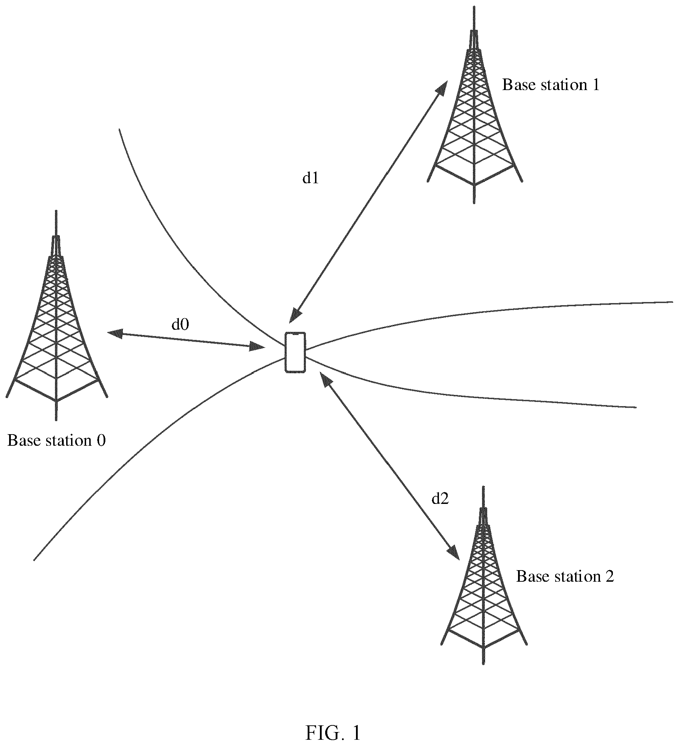

The following uses the UL-RTOA as an example to describe a basic principle of uplink positioning. FIG. 1 is a schematic diagram of an uplink positioning technology. As shown in FIG. 1, a plurality of access network devices measure arrival time of an SRS signal sent by UE, and one hyperbola positioning area may be determined based on a time difference of arrival that is of the signal and that is measured by every two access network devices. For example, a time difference between arrival of the SRS signal sent by the UE at an access network device 0 and arrival of the SRS signal at an access network device 1 is d0 - d1, and the time difference may form a hyperbola. A difference between a distance from each point on the hyperbola to the access network device 0 and a distance from the point to the access network device 1 is the same. Similarly, a hyperbola formed by a time difference between the access network device 0 and an access network device 2 may be determined. An intersection point may be determined by using the two hyperbolas, and an exact location of the UE may be determined with reference to geographic location information of the access network devices.

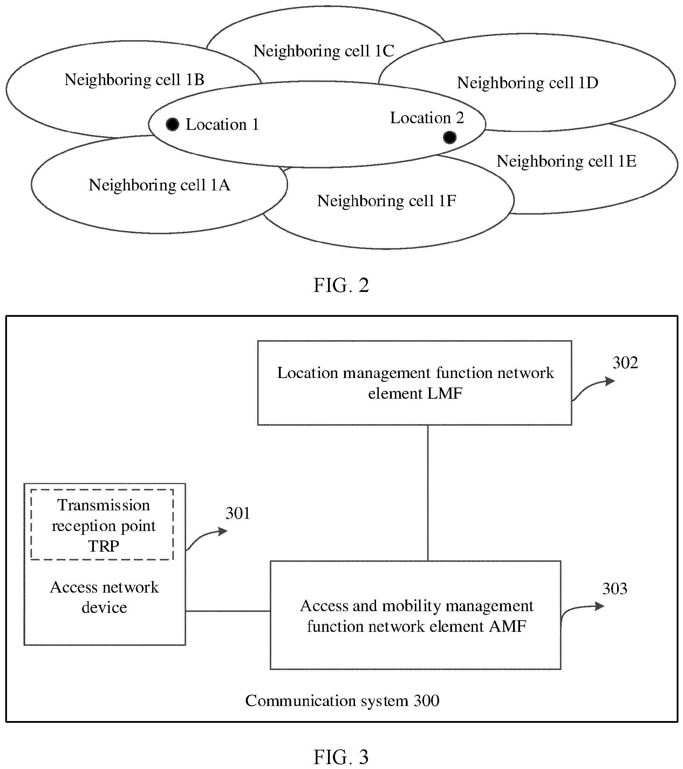

In an actual scenario, an uplink SRS sent by the UE cannot be received in all a plurality of neighboring cells of a cell in which the UE is located for measurement, or the UE cannot effectively receive downlink positioning reference signals of all the plurality of neighboring cells. For example, as shown in FIG. 2, when the UE is at a location 1 of a cell 1, a signal of the UE can be better received in neighboring cells 1A to 1C, so that the neighboring cells 1A to 1C can participate in positioning measurement, but the signal of the UE cannot be effectively detected in neighboring cells 1D to 1F. When the UE is in a location 2 of the cell 1, the signal of the UE can be better received in neighboring cell 1D to 1F, so that the neighboring cell 1D to 1F can participate in positioning measurement, but the signal of the UE cannot be effectively detected in neighboring cells 1A to 1C. Therefore, if a cell or an access network device selected by an LMF to participate in measurement may be inaccurate, a problem of inaccurate positioning or a waste of resources caused by an unnecessary access network device participating in positioning may occur.

Embodiments of this application provide a communication method and apparatus. Technical solutions in embodiments of this application may be applied to various communication systems, for example, a long term evolution (long term evolution, LTE) system, a future 5th generation (5th Generation, 5G) system such as a new generation radio access technology (new radio access technology, NR), and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 3 is first used as an example to describe in detail a communication system applicable to embodiments of this application. FIG. 3 is a schematic diagram of a communication system to which a communication method according to an embodiment of this application is applicable. As shown in FIG. 3, the communication system 300 includes an access network device 301 and a location management function network element LMF 302. Optionally, the communication system 300 may further include an access and mobility management function network element AMF 303.

The following describes in detail functions of network elements or devices in the communication system in this embodiment of this application.

The access network device (access network, AN) provides a radio access service for the terminal device. The access network device is a device, in the communication system, that enables the terminal device to access a wireless network. The access network device is a node in a radio access network, and may also be referred to as an access network device, or may also be referred to as a radio access network (radio access network, RAN) node (or device). Currently, for example, some access network devices are: a gNB, a transmission reception point (transmission reception point, TRP), a transmission point (transmission point, TP), an evolved NodeB (evolved NodeB, eNB), a radio network controller (radio network controller, RNC), a NodeB (NodeB, NB), an access network device controller (base station controller, BSC), an access network device transceiver station (base transceiver station, BTS), a home access network device (for example, a home evolved NodeB, or a home NodeB, HNB), a baseband unit (base band unit, BBU), or a wireless fidelity (wireless fidelity, Wi-Fi) access point (access point, AP). Alternatively, the some access network devices may include an evolved NodeB (evolved NodeB, eNB), an evolved packet core network (evolved packet core, EPC), a gNB, and a central unit (centralized unit, CU) and a distributed unit (distributed unit, DU) in a cloud access network (cloud radio access network, Cloud RAN) system. This is not limited in this embodiment of this application.

The terminal device may also be referred to as user equipment (user equipment, UE), a mobile station (mobile station, MS), a mobile terminal (mobile terminal, MT), or the like, and is a device that provides voice and/or data connectivity to a user. For example, the terminal device may include a handheld device that has a wireless connection function or a vehicle-mounted device. Currently, the terminal device may be a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 3, the terminal device is shown by using UE as an example, and the terminal device is not limited.

The access and mobility management function network element AMF may be configured to manage access control and mobility of the terminal device. In an actual application, the access and mobility management function network element includes a mobility management function of a mobility management entity (mobility management entity, MME) in a network framework in long term evolution (long term evolution, LTE), and further includes an access management function. Specifically, the access and mobility management function network element may be responsible for registration of the terminal device, mobility management, a tracking area update procedure, reachability detection, selection of a session management function network element, mobility state transition management, and the like. For example, in 5G, the access and mobility management function network element may be an AMF (access and mobility management function) network element, for example, as shown in FIG. 3. In future communication, for example, in 6G, the access and mobility management function network element may still be an AMF network element or have another name. This is not limited in this application. When the access and mobility management function network element is an AMF network element, the AMF may provide a Namf service.

The positioning server may be configured to determine a location of the UE, obtain downlink location measurement or location estimation from the UE, or the like. The positioning server may include a location management function network element LMF. For example, in 5G, the location management function network element (location management function, LMF) is shown in FIG. 3. In a future communication system, for example, in 6G, the location management function network element may still be an LMF network element or have another name. This is not limited in this application.

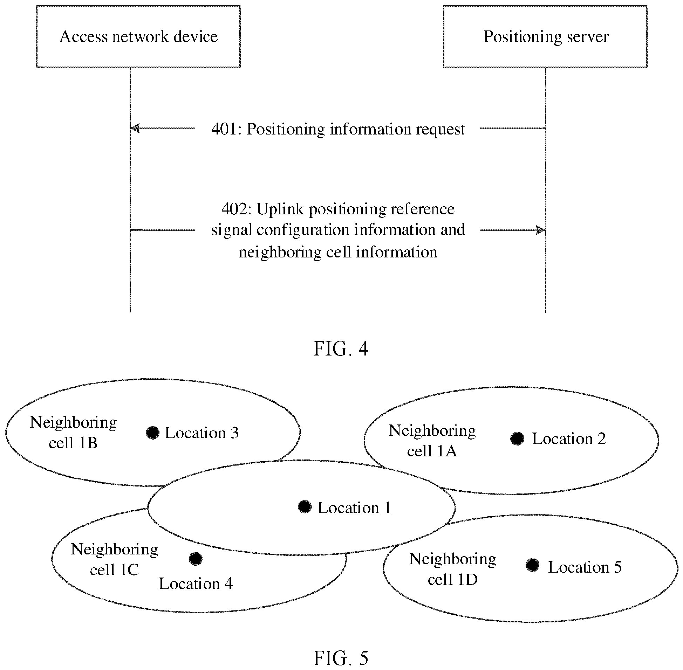

FIG. 4 is an example flowchart of a communication method according to an embodiment of this application. The method may include the following steps.

Step 401: A positioning server sends a positioning information request to an access network device.

The positioning information request may be used to request the access network device to configure uplink positioning reference signal configuration information for a terminal device. The positioning information request may be a positioning information request message of a new radio positioning protocol A (new radio positioning protocol a, NRPPa) protocol. An uplink positioning reference signal may be an SRS or a positioning SRS (positioning SRS).

Step 402: The access network device sends the uplink positioning reference signal configuration information and neighboring cell information to the positioning server.

After receiving the positioning information request from the positioning server, the access network device may determine the uplink positioning reference signal configuration information for the terminal device. The access network device may add the uplink positioning reference signal configuration information to the positioning information response message of the NRPPa protocol.

Optionally, the positioning server may send first information to the access network device, and the first information may be used to request the access network device to report the neighboring cell information of the terminal device. The first information may be carried in the positioning information request, or the first information and the positioning information request may be sent in different messages. The access network device may report the neighboring cell information to the positioning server based on the first information. The access network device may add the neighboring cell information and the uplink positioning reference signal configuration information to one message, and report the message to the positioning server. For example, the neighboring cell information and the uplink positioning reference signal configuration information are carried in the positioning information response message and reported to the positioning server. Alternatively, the access network device may separately add the neighboring cell information and the uplink positioning reference signal configuration information to different messages, and report the messages to the positioning server.

Optionally, the neighboring cell information may be used to assist the positioning server in determining a measurement cell, a measurement access network device, or a measurement transmission reception point (transmission reception point, TRP).

The neighboring cell information may include an identifier of one or more first neighboring cells. The neighboring cell identifier may be a global cell identifier (cell global identifier, CGI) or a physical cell identifier (physical cell identifier, PCI). The first neighboring cell may be a neighboring cell of the terminal device. For example, refer to FIG. 5. When the terminal device is located in a serving cell 1, the first neighboring cell may be a neighboring cell 1A, a neighboring cell 1B, a neighboring cell 1C, and a neighboring cell 1D. Optionally, the neighboring cell information may also include a measurement result of a measurement quantity of the first neighboring cell. For example, refer to FIG. 3. The neighboring cell information may further include a measurement result of a measurement quantity of the neighboring cell 1A, a measurement result of a measurement quantity of the neighboring cell 1B, a measurement result of a measurement quantity of the neighboring cell 1C, and a measurement result of a measurement quantity of the neighboring cell 1D.

The measurement result of the measurement quantity of the first neighboring cell may be a measurement result of a measurement quantity of radio resource management (radio resource management, RRM) of the first neighboring cell. The measurement quantity may be reference signal received power (reference signal receiving power, RSRP) of a synchronization signal block (synchronization signal and PBCH block, SSB), reference signal received quality (reference signal receiving quality, RSRQ) of an SSB, RSRP of a channel state information-reference signal (channel state information-reference signal, CSI-RS), RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

It should be understood that these measurement results may be reported by the terminal device. In an example, the measurement result of the first neighboring cell may be a measurement result of a measurement behavior previously indicated by the access network device. For example, in mobility management, the access network device may request a measurement result of a measurement quantity of a neighboring cell from the terminal device, and the terminal device may report the measurement result of the measurement quantity of the neighboring cell to the access network device. The measurement result of the measurement quantity of the first neighboring cell in the neighboring cell information may be determined based on the measurement result that is of the measurement quantity of the neighboring cell and that is reported by the terminal device in mobility management.

In another example, these measurement results each may also be a measurement result of a measurement behavior indicated by the access network device to the terminal device after receiving the positioning information request. After receiving the positioning information request from the positioning server, the access network device may request measurement of a neighboring cell from the terminal device. The access network device may receive a measurement result that is of a measurement quantity of the neighboring cell and that is reported by the terminal device. The measurement result of the measurement quantity of the first neighboring cell in the neighboring cell information may be determined based on the measurement result that is of the measurement quantity of the neighboring cell and that is reported by the terminal device.

Optionally, the identifier of one or more first neighboring cells sent by the access network device may be an identifier of a first neighboring cell whose measurement result of a measurement quantity of the first neighboring cell is greater than or equal to a first threshold. The first threshold may be indicated by the positioning server, may be determined by the access network device, or may be specified in a communication protocol. This is not specifically limited in this application. For example, refer to FIG. 2. The terminal device is located at a location 1 of a serving cell, a measurement result of a measurement quantity of a neighboring cell 1A from the terminal device is a first value, a measurement result of a measurement quantity of a neighboring cell 1B is a second value, a measurement result of a measurement quantity of a neighboring cell 1C is a third value, a measurement result of a measurement quantity of a neighboring cell 1D is a fourth value, a measurement result of a measurement quantity of a neighboring cell 1E is a fifth value, and a measurement result of a neighboring cell 1F is a sixth value. The first value, the second value, and the third value are all greater than or equal to the first threshold, and the fourth value, the fifth value, and the sixth value are all less than the first threshold. Therefore, the access network device may send identifiers of the neighboring cell 1A, the neighboring cell 1B, and the neighboring cell 1C to the positioning server. Optionally, the access network device may further send the first value of the measurement result of the measurement quantity of the neighboring cell 1A, the second value of the measurement result of the measurement quantity of the neighboring cell 1B, and the third value of the measurement result of the measurement quantity of the neighboring cell 1C to the positioning server.

In this embodiment of this application, after receiving the neighboring cell information, the positioning server may select, based on the neighboring cell information, a cell, an access network device, or a TRP that participates in measurement. The following describes a method for determining, by the positioning server, the cell, the access network device, or the TRP that participates in measurement. It should be noted that the following method 1 and method 2 are examples, and do not constitute a limitation on the method used by the positioning server to determine the cell, the access network device, or the TRP that participates in measurement. The positioning server may alternatively determine, in another method based on the neighboring cell information reported by the terminal device or the access network device, the cell, the access network device, or the TRP that participates in measurement.

Method 1: A serving access network device reports the identifier of one or more first neighboring cells to the positioning server.

In an example, the access network device reports an identifier of a neighboring cell of the terminal device to the positioning server. The positioning server may determine, by using location information of the first neighboring cell or location information of a neighboring cell access network device that manages the first neighboring cell, the cell, the access network device, or the TRP that participates in measurement. For example, the positioning server may obtain the location information of the first neighboring cell, and select a first cell whose distance from the first cell to a serving cell is less than or equal to a first preset value as a cell that participates in measurement. Locations of the first neighboring cell and the serving cell may be a central location of the first neighboring cell and a central location of the serving cell.

Refer to FIG. 5. The serving access network device reports identifiers of the neighboring cell 1A, the neighboring cell 1B, the neighboring cell 1C, and the neighboring cell 1D to the positioning server. The central location of the serving cell is at a location 1, a center location of the neighboring cell 1A is at a location 2, a center location of the neighboring cell 1B is at a location 3, a center location of the neighboring cell 1C is at a location 4, and a center location of the neighboring cell 1D is at a location 5. A distance X1 between the location 2 and the location 1 is greater than a first preset value T1, a distance X2 between the location 3 and the location 1 is equal to the first preset value T1, a distance X3 between the location 4 and the location 1 is less than the first preset value T1, and a distance X4 between the location 5 and the location 1 is greater than the first preset value T1. Therefore, the positioning server may determine that the neighboring cell 1B and the neighboring cell 1C are cells that participate in measurement.

Alternatively, the positioning server may obtain location information of a neighboring cell access network device that manages the first neighboring cell, and select, as the access network device or the TRP that participates in measurement, a neighboring cell access network device that manages the first neighboring cell and whose distance from the neighboring cell access network device to the serving access network device is less than or equal to a second preset value. The first preset value and the second preset value may be the same or may be different. The first preset value and the second preset value may be indicated by the positioning server, may be determined by the access network device, or may be specified in a communication protocol. This is not specifically limited in this application.

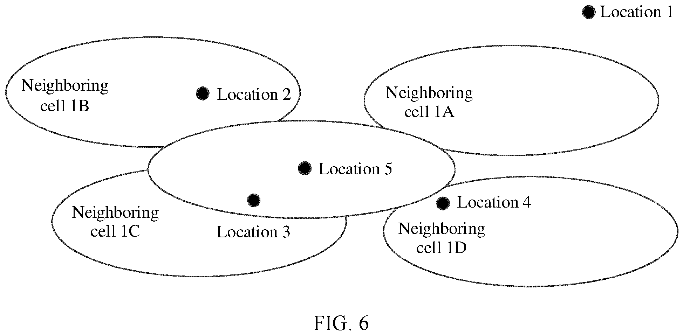

Refer to FIG. 6. The serving access network device reports identifiers of the neighboring cell 1A, the neighboring cell 1B, the neighboring cell 1C, and the neighboring cell 1D to the positioning server. A neighboring cell access network device A that manages the neighboring cell 1A is located at a location 1, a neighboring cell access network device B that manages the neighboring cell 1B is located at a location 2, a neighboring cell access network device C that manages the neighboring cell 1C is located at a location 3, a neighboring cell access network device D that manages the neighboring cell 1D is located at a location 4, and the serving access network device is located at a location 5. A distance Y1 between the location 1 and the location 5 is greater than a second preset value T2, a distance Y2 between the location 2 and the location 5 is less than the second preset value T2, a distance Y3 between the location 3 and the location 5 is less than the second preset value T2, and a distance Y4 between the location 4 and the location 5 is less than the second preset value T2. Therefore, the positioning server may determine that the neighboring cell access network devices B, C, and D are access network devices that participate in measurement.

Based on the foregoing solution, the positioning server may determine, based on location information of the neighboring cell of the terminal device or location information of the neighboring cell access network device that manages the neighboring cell, the cell, the access network device, or the TRP that participates in measurement, so that accuracy for determining the cell, the access network device, or the TRP that participates in measurement can be improved, and a positioning success possibility can be improved.

In another example, the identifier of the first neighboring cell reported by the serving access network device to the positioning server may be an identifier of a first neighboring cell whose measurement result is greater than or equal to the first threshold. Therefore, the positioning server may select, based on the identifier of the first neighboring cell reported by the serving access network device, the cell, the access network device, or the TRP that participates in measurement. For example, the positioning server may randomly select identifiers of a plurality of first neighboring cells from the identifiers of the first neighboring cells reported by the serving access network device, use cells corresponding to the identifiers of the plurality of first neighboring cells as cells that participate in measurement, and manage neighboring cell access network devices of the plurality of first neighboring cells as access network devices that participate in measurement.

Optionally, if the identifier of the first neighboring cell reported by the serving access network device to the positioning server is an identifier of a first neighboring cell whose measurement result is greater than or equal to the first threshold, the positioning server may also determine, based on location information of the first neighboring cell or location information of the neighboring cell access network device that manages the first neighboring cell, the cell, the access network device, or the TRP that participates in measurement. For example, the positioning server may select, based on the identifiers of the plurality of first neighboring cells reported by the serving access network device, a first neighboring cell whose distance from the first neighboring cell to the serving cell is less than or equal to the first preset value as the neighboring cell that participates in measurement. Alternatively, the positioning server may select, based on the identifiers of the plurality of first neighboring cells reported by the serving access network device, a neighboring cell access network device that manages a first neighboring cell corresponding to the identifier of the first neighboring cell and a neighboring cell access network device that manages the first neighboring cell and whose distance from the neighboring cell access network device to the serving access network device is less than or equal to the second preset value as access network devices or TRPs that participate in measurement.

Based on the foregoing solution, because the identifier of the neighboring cell reported by the access network device is the identifier of the neighboring cell whose measurement result is greater than the first threshold, a possibility that the uplink positioning reference signal sent by the terminal device is normally received in the neighboring cell can be improved, and accuracy of the neighboring cell, the access network device, or the TRP that is determined by the positioning server and that participates in measurement can be improved.

Method 2: A serving access network device reports, to the positioning server, the identifier of one or more first neighboring cells and the measurement result of the measurement quantity corresponding to the first neighboring cell.

In an example, the serving access network device may report a measurement result that is of a measurement quantity of a first neighboring cell and that is reported by the terminal device and an identifier of the first neighboring cell to the positioning server. The positioning server may select, from the first neighboring cells, a first neighboring cell that corresponds to the identifier of the first neighboring cell and whose measurement result of a measurement quantity is greater than or equal to a third threshold as the neighboring cell that participates in measurement. Alternatively, the positioning server may select an access network device that manages a first neighboring cell that corresponds to the identifier of the first neighboring cell and whose measurement result of a measurement quantity is greater than or equal to a third threshold as the access network device or the TRP that participates in measurement. The third threshold may be indicated by the serving access network device, or may be determined by the positioning server, or may be specified in a communication protocol. This is not specifically limited in this application.

For example, the serving access network device reports identifiers of the neighboring cell 1A, the neighboring cell 1B, the neighboring cell 1C, and the neighboring cell 1D; and a measurement result X1 of the neighboring cell 1A, a measurement result X2 of the neighboring cell 1B, a measurement result X3 of the neighboring cell 1C, and a measurement result X4 of the neighboring cell 1D to the positioning server. X1 is greater than the third threshold, X2 is greater than the third threshold, X3 is less than the third threshold, and X4 is equal to the third threshold. Therefore, the positioning server may determine that the neighboring cell 1A, the neighboring cell 1B, and the neighboring cell 1D are cells that participate in the measurement. Alternatively, the positioning server may determine that neighboring cell access network devices that manage the neighboring cell 1A, the neighboring cell 1B, and the neighboring cell 1D are access network devices or TRPs that participate in measurement.

Optionally, the positioning server may select, based on the measurement results reported by the serving access network device, first cells corresponding to N large measurement results as cells that participate in the measurement, or select neighboring cell access network devices that manage first cells corresponding to N large measurement results as access network devices or TRPs that participate in measurement. For example, the positioning server may sort the measurement results reported by the serving access network device in descending order, select top N measurement results, use first cells corresponding to the top N measurement results as cells that participate in the measurement, and use neighboring cell access network devices that manage the first cells corresponding to the top N measurement results as access network devices or TRPs that participate in measurement. It should be understood that the serving access network device may sort the measurement results reported by the terminal device in ascending order, and select N measurement results in back-to-front order. N is an integer greater than or equal to 1. For example, N may be 3. Optionally, N should be greater than or equal to a quantity of access network devices that need to participate in positioning of the terminal device.

In another example, the serving access network device may select, from the measurement results that are of the measurement quantities of the first neighboring cells and that are reported by the terminal device, a measurement result being greater than or equal to the first threshold and an identifier of a corresponding first neighboring cell, and report the measurement result and the identifier of the first neighboring cell to the positioning server. The positioning server may randomly select N measurement results from the measurement results, use first neighboring cells corresponding to the N measurement results as cells that participate in measurement, and use neighboring cell access network devices that manage the first neighboring cells corresponding to the N measurement results as access network devices or TRPs that participate in measurement. Optionally, the positioning server may select N large measurement results from the measurement results reported by the serving access network device, use first neighboring cells corresponding to the N measurement results as cells that participate in measurement, and use neighboring cell access network devices that manage the first neighboring cells corresponding to the N measurement results as access network devices or TRPs that participate in measurement. Details are not described herein again.

In a possible implementation, the positioning server may select, from the measurement results that are of the measurement quantities of the first neighboring cells and that are reported by the serving access network device, a measurement result being greater than or equal to a fourth threshold, use a first cell corresponding to the measurement result being greater than or equal to the fourth threshold as the first cell that participates in measurement, and use a neighboring cell access network device that manages the first cell corresponding to the measurement result being greater than or equal to the fourth threshold as the access network device or the TRP that participates in measurement. The fourth threshold may be indicated by the serving access network device, or may be determined by the positioning server, or may be specified in a communication protocol. This is not specifically limited in this application.

Based on the foregoing method 1 and method 2, the positioning server may determine the cell, the access network device, or the TRP that participates in measurement. The positioning server may send a measurement request (TRP measurement request) to the access network device that manages the cell that participates in measurement, or the positioning server may send a measurement request to the access network device and the TRP that participates in measurement. The measurement request may carry the uplink positioning reference signal configuration information of the terminal device. The access network device that participates in measurement may receive an uplink positioning reference signal from the terminal device based on the uplink positioning reference signal configuration information of the terminal device, and perform measurement. Each access network device that participates in measurement may report a measurement result to the positioning server, and the positioning server performs processing based on the measurement result reported by the access network device that participates in measurement, to obtain location information of the terminal device. The measurement result may be a measured value of the measurement quantity of an uplink reference signal, or may be a quantized value of the measurement quantity. The positioning server may calculate the location information of the terminal device by using an uplink angle of arrival (uplink arrival of arrival, UL-AOA) positioning technology or an uplink time difference of arrival (uplink time difference of arrival, UL-TDOA) positioning technology. It should be understood that the positioning server may alternatively calculate the location information of the terminal device by using another positioning technology. This is not specifically limited in this application.

Based on the foregoing solution, the positioning server may learn of accurate neighboring cell information of the terminal device, to more accurately select the cell, the access network device, or the TRP that participates in measurement, thereby improving positioning efficiency, improving accuracy of a positioning result, and reducing unnecessary resource waste.

In a possible implementation, the serving access network device may update the neighboring cell information of the terminal device, and report updated neighboring cell information to the positioning server. The serving access network device may send the updated neighboring cell information to the positioning server by using a positioning information update (positioning information update) message. Optionally, the serving access network device may send the updated neighboring cell information to the positioning server when a first condition is met. The following describes the first condition. The first condition may include one or more of the following condition 1 to condition 5. It should be understood that the following condition 1 to condition 5 are merely examples, and do not constitute a limitation on the first condition. The first condition may further include another condition. This is not specifically limited in this application.

Condition 1: A measurement result of a measurement quantity corresponding to at least one first neighboring cell in the identifiers of the first neighboring cells changes.

For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, and an identifier of the neighboring cell 1D and a fourth value of a measurement result of a corresponding measurement quantity. The serving access network device further receives the measurement result of the neighboring cell reported by the terminal device, where the measurement result of the measurement quantity of the neighboring cell 1B is a fifth value. Therefore, because the measurement result of the measurement quantity of the neighboring cell 1B changes, the serving access network device may report updated neighboring cell information. The updated neighboring cell information may include the identifier of the neighboring cell 1A and the first value of the result of the corresponding measurement quantity, the identifier of the neighboring cell 1B and the fifth value of the measurement result of the corresponding measurement quantity, the identifier of the neighboring cell 1C and the third value of the measurement result of the corresponding measurement quantity, and the identifier of the neighboring cell 1D and the fourth value of the measurement result of the corresponding measurement quantity. Optionally, the updated neighboring cell information may include the identifier of the first neighboring cell whose measurement result changes and/or the measurement result of the corresponding measurement quantity. For example, the updated neighboring cell information may include the identifier of the neighboring cell 1B and the fifth value of the measurement result of the corresponding measurement quantity.

In an example, to avoid frequent update of the neighboring cell information, the foregoing condition 1 may also be that a quantity of identifiers, in the identifiers of the first neighboring cells, of first neighboring cells whose measurement results of measurement quantities change is greater than or equal to a sixth threshold. The sixth threshold may be determined by the serving access network device, or may be indicated by the positioning server, or may be specified in a communication protocol. This is not specifically limited in this application. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, and the measurement result of the measurement quantity of the neighboring cell 1C is an eighth value. Because the quantity of the identifiers of the neighboring cells whose measurement results change is 3, which is greater than the sixth threshold 2, the serving access network device may send the updated neighboring cell information to the positioning server. Optionally, the updated neighboring cell information may include the identifier of the first neighboring cell whose measurement result changes and/or the measurement result of the corresponding measurement quantity.

In another example, the foregoing condition 1 may also be that a ratio of a quantity of identifiers, in the identifiers of the first neighboring cells, of the first neighboring cells whose measurement results of measurement quantities change to a total quantity of identifiers of all the first neighboring cells is greater than or equal to a seventh threshold. The seventh threshold may be determined by the serving access network device, or may be indicated by the positioning server, or may be specified in a communication protocol. This is not specifically limited in this application. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, and the measurement result of the measurement quantity of the neighboring cell 1C is an eighth value. Because the ratio of the quantity of the identifiers of the neighboring cells whose measurement results change to the total quantity of identifiers of the first neighboring cells is 3/5, which is greater than 1/2 of the seventh threshold, the serving access network device may send the updated neighboring cell information to the positioning server. Optionally, the updated neighboring cell information may include the identifier of the first neighboring cell whose measurement result changes and/or the measurement result of the corresponding measurement quantity.

Condition 2: A change of a measurement result of a measurement quantity corresponding to at least one first neighboring cell in the identifiers of the first neighboring cells is greater than or equal to a second threshold.

The second threshold may be determined by the serving access network device, or may be indicated by the positioning server, or may be specified in a communication protocol. This is not specifically limited in this application.

For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, and an identifier of the neighboring cell 1D and a fourth value of a measurement result of a corresponding measurement quantity. The serving access network device further receives the measurement result of the neighboring cell reported by the terminal device, where the measurement result of the measurement quantity of the neighboring cell 1B is a fifth value. A difference between the fifth value and the second value is greater than the second threshold. Therefore, the serving access network device may send the updated neighboring cell information to the positioning server. The updated neighboring cell information may include the identifier of the neighboring cell 1A and the first value of the result of the corresponding measurement quantity, the identifier of the neighboring cell 1B and the fifth value of the measurement result of the corresponding measurement quantity, the identifier of the neighboring cell 1C and the third value of the measurement result of the corresponding measurement quantity, and the identifier of the neighboring cell 1D and the fourth value of the measurement result of the corresponding measurement quantity. Optionally, the updated neighboring cell information may include the identifier of the first neighboring cell whose measurement result changes and/or the measurement result of the corresponding measurement quantity. For example, the updated neighboring cell information may include the identifier of the neighboring cell 1B and the fifth value of the measurement result of the corresponding measurement quantity.

In an example, to avoid frequent update of the neighboring cell information, the foregoing condition 2 may also be that a quantity of identifiers, in the identifiers of the first neighboring cells, of first neighboring cells whose changes of measurement results of measurement quantities each are greater than or equal to the second threshold is greater than or equal to a sixth threshold. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, and the measurement result of the measurement quantity of the neighboring cell 1C is an eighth value. A difference between the sixth value and the first value is greater than the second threshold, a difference between the seventh value and the second value is greater than the second threshold, and a difference between the eighth value and the third value is less than the second threshold. Because the quantity of the identifiers of the neighboring cells whose changes of the measurement results each are greater than or equal to the second threshold is 2, which is equal to the sixth threshold 2, the serving access network device may send the updated neighboring cell information to the positioning server. Optionally, the updated neighboring cell information may include the identifier of the first neighboring cell whose measurement result changes and/or the measurement result of the corresponding measurement quantity.

In another example, the foregoing condition 2 may also be that a ratio of a quantity of identifiers, in the identifiers of the first neighboring cells, of the first neighboring cells whose changes of measurement results of measurement quantities each are greater than or equal to the second threshold to a total quantity of identifiers of all the first neighboring cells is greater than or equal to a seventh threshold. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, and the measurement result of the measurement quantity of the neighboring cell 1C is an eighth value. A difference between the sixth value and the first value is greater than the second threshold, a difference between the seventh value and the second value is greater than the second threshold, and a difference between the eighth value and the third value is equal to the second threshold. Because the ratio of the quantity of the identifiers of the neighboring cells whose changes of measurement results each are greater than or equal to the second threshold to the total quantity of identifiers of the first neighboring cells is 3/5, which is greater than 1/2 of the seventh threshold, the serving access network device may send the updated neighboring cell information to the positioning server. Optionally, the updated neighboring cell information may include the identifier of the first neighboring cell whose measurement result changes and/or the measurement result of the corresponding measurement quantity.

Condition 3: The neighboring cell of the terminal device changes.

That the neighboring cell of the terminal device change may be caused by a problem such as movement of the terminal device or blocking of a cell signal. The serving access network device may determine, from the measurement result reported by the terminal device, whether the neighboring cell of the terminal device changes. For example, if the identifier of the neighboring cell in the measurement result reported by the terminal device is the same as an identifier of a neighboring cell in a measurement result reported last time, it may be considered that the neighboring cell of the terminal device does not change. If the identifier of the neighboring cell in the measurement result reported by the terminal device is different from an identifier of a neighboring cell in a measurement result reported last time, and if there is a new identifier of a neighboring cell, or an identifier of one or more neighboring cells in the measurement result reported last time does not exist in a measurement result reported this time, it may be considered that the neighboring cell of the terminal device changes. Therefore, the serving access network device may send the updated neighboring cell information to the positioning server. The neighboring cell information may include the identifier of the first neighboring cell of the terminal device and/or the measurement result of the measurement quantity corresponding to the first neighboring cell.

Condition 4: The uplink positioning reference signal configuration information of the terminal device changes.

When updating the uplink positioning reference signal configuration information for the terminal device, the serving access network device may send the updated neighboring cell information to the positioning server. For example, the serving access network device determines uplink positioning reference signal configuration information 1 for the terminal device, and sends neighboring cell information 1 to the positioning server. After a period of time, the serving access network device further determines uplink positioning reference signal configuration information 2 for the terminal device, and the serving access network device may send neighboring cell information 2 to the positioning server. The uplink positioning reference signal configuration information 1 may be the same as or different from the uplink positioning reference signal configuration information 2, and the neighboring cell information 1 may be the same as or different from the neighboring cell information 2.

Condition 5: A measurement result of a measurement quantity corresponding to at least one first neighboring cell in the identifiers of the first neighboring cells is less than a fifth threshold.

The fifth threshold may be determined by the serving access network device, or may be indicated by the positioning server, or may be specified in a communication protocol. This is not specifically limited in this application.

For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, and an identifier of the neighboring cell 1D and a fourth value of a measurement result of a corresponding measurement quantity. The serving access network device further receives the measurement result of the neighboring cell reported by the terminal device, where the measurement result of the measurement quantity of the neighboring cell 1B is a fifth value. The fifth value is less than the fifth threshold. Therefore, the serving access network device may send the updated neighboring cell information to the positioning server. The updated neighboring cell information may include the identifier of the neighboring cell 1A and the first value of the result of the corresponding measurement quantity, the identifier of the neighboring cell 1B and the fifth value of the measurement result of the corresponding measurement quantity, the identifier of the neighboring cell 1C and the third value of the measurement result of the corresponding measurement quantity, and the identifier of the neighboring cell 1D and the fourth value of the measurement result of the corresponding measurement quantity. Optionally, the updated neighboring cell information may include the identifier of the first neighboring cell whose measurement result changes and/or the measurement result of the corresponding measurement quantity. For example, the updated neighboring cell information may include the identifier of the neighboring cell 1B and the fifth value of the measurement result of the corresponding measurement quantity.

In an example, to avoid frequent update of the neighboring cell information, the foregoing condition 5 may also be that a quantity of identifiers, in the identifiers of the first neighboring cells, of first neighboring cells whose measurement results of measurement quantities each are less than the fifth threshold is greater than or equal to an eighth threshold. The eighth threshold may be determined by the serving access network device, or may be indicated by the positioning server, or may be specified in a communication protocol. This is not specifically limited in this application. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, the measurement result of the measurement quantity of the neighboring cell 1C is an eighth value, and the measurement result of the measurement quantity of the neighboring cell 1D is a ninth value. The sixth value is less than the fifth threshold, the seventh value is less than the fifth threshold, the eighth value is less than the fifth threshold, and the ninth value is greater than the fifth threshold. Because the quantity of the identifiers of the neighboring cells whose measurement results each are less than the fifth threshold is 3, which is greater than the eighth threshold 2, the serving access network device may send the updated neighboring cell information to the positioning server. Optionally, the updated neighboring cell information may include the identifier of the first neighboring cell whose measurement result changes and/or the measurement result of the corresponding measurement quantity.

In another example, the foregoing condition 5 may also be that a ratio of a quantity of identifiers, in the identifiers of the first neighboring cells, of the first neighboring cells whose measurement results of measurement quantities each are less than the fifth threshold to a total quantity of identifiers of all the first neighboring cells is greater than or equal to a ninth threshold. The ninth threshold may be determined by the serving access network device, or may be indicated by the positioning server, or may be specified in a communication protocol. This is not specifically limited in this application. For example, the neighboring cell information reported by the serving access network device includes an identifier of the neighboring cell 1A and a first value of a result of a corresponding measurement quantity, an identifier of the neighboring cell 1B and a second value of a measurement result of a corresponding measurement quantity, an identifier of the neighboring cell 1C and a third value of a measurement result of a corresponding measurement quantity, an identifier of the neighboring cell 1D and a fourth value of a measurement result of a corresponding measurement quantity, and an identifier of the neighboring cell 1E and a fifth value of a measurement result of a corresponding measurement quantity. The serving access network device receives the measurement result of the neighboring cell reported by the terminal device. The measurement result of the measurement quantity of the neighboring cell 1A is a sixth value, the measurement result of the measurement quantity of the neighboring cell 1B is a seventh value, and the measurement result of the measurement quantity of the neighboring cell 1C is an eighth value. The sixth value is less than the fifth threshold, the seventh value is less than the fifth threshold, and the eighth value is less than the fifth threshold. Because the ratio of the quantity of the identifiers of the neighboring cells whose measurement results each are less than the fifth threshold to the total quantity of identifiers of the first neighboring cells is 3/5, which is greater than 1/2 of the ninth threshold, the serving access network device may send the updated neighboring cell information to the positioning server. Optionally, the updated neighboring cell information may include the identifier of the first neighboring cell whose measurement result changes and/or the measurement result of the corresponding measurement quantity.

Based on the condition 1 to the condition 5, when the first condition is met, the serving access network device may update the neighboring cell information of the terminal device, and send the updated neighboring cell information to the positioning server, and may notify the positioning server in a timely manner after the neighboring cell information of the terminal device changes, so that the better cell, access network device, or TRP that participates in measurement can be selected.

The following describes the communication method provided in embodiments of this application with reference to specific embodiments.

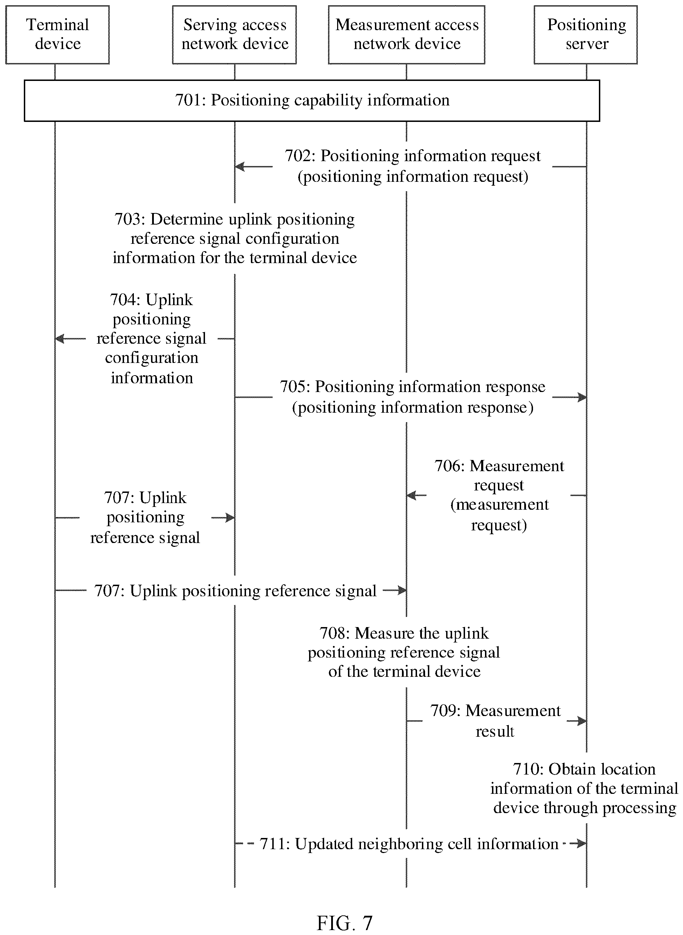

FIG. 7 is an example flowchart of a communication method according to an embodiment of this application. The method may include the following steps. It should be understood that, in this embodiment of this application, all steps shown in FIG. 7 may be performed, or a person skilled in the art may select some steps from the steps shown in FIG. 7 to perform, to constitute a complete embodiment.

Step 701: A positioning server obtains positioning capability information of a terminal device.

The positioning server may send a request capability (Request capabilities) message to the terminal device. The capability request message is used to request a positioning capability of the terminal device. The terminal device may send the positioning capability information to the positioning server by using a provide capability (Provide capabilities) message. The positioning capability information may include a supported positioning technology. For example, UL-RTOA is supported.

Step 702: The positioning server sends a positioning information request (positioning information request) to a serving access network device.

The positioning information request may be used to request the serving access network device to configure uplink positioning reference signal configuration information for the terminal device.

Step 703: The serving access network device determines the uplink positioning reference signal configuration information for the terminal device.

Step 704: The serving access network device sends the uplink positioning reference signal configuration information to the terminal device.

The serving access network device may send the uplink positioning reference signal configuration information to the terminal device by using a radio resource control (radio resource control, RRC) message.

Step 705: The serving access network device sends a positioning information response (positioning information response) to the positioning server.

The positioning information response may include neighboring cell information. For the neighboring cell information, refer to related descriptions in the method embodiment shown in FIG. 5. Details are not described herein again. It should be understood that the serving access network device may first perform step 704 and then perform step 705, or may first perform step 705 and then perform step 704, or may simultaneously perform step 705 and step 705. This is not specifically limited in this application.

Step 706: The positioning server sends a measurement request (measurement request) to a measurement access network device.

The positioning server may determine, based on the neighboring cell information reported by the serving access network device, an access network device that participates in measurement. For details, refer to the method 1 and the method 2 in the method embodiment shown in FIG. 5. Details are not described herein again.

Step 707: The terminal device sends an uplink positioning reference signal based on the uplink positioning reference signal configuration information.

The terminal device may send the uplink positioning reference signal based on a time-frequency resource of the uplink positioning reference signal in the uplink positioning reference signal configuration information. Optionally, the serving access network device and the measurement access network device may receive the uplink positioning reference signal from the terminal device.

Step 708: The measurement access network device measures the uplink positioning reference signal of the terminal device.

The measurement access network device may measure a measurement quantity of the uplink positioning reference signal. For example, the measurement access network device may measure RSRP of the uplink reference signal.

Step 709: The measurement access network device sends a measurement result to the positioning server.

The measurement result may be a measurement result of a measurement quantity obtained by measuring the uplink positioning reference signal from the terminal device by the measurement access network device.

Step 710: The positioning server obtains location information of the terminal device through processing based on the measurement result.

The positioning server may calculate the location information of the terminal device by using a UL-AOA positioning technology or a UL-TDOA positioning technology. It should be understood that the positioning server may alternatively calculate the location information of the terminal device by using another positioning technology. This is not specifically limited in this application.

Optionally, step 711 may be further performed.

Step 711: The serving access network device sends updated neighboring cell information to the positioning server.

It should be understood that step 711 may be performed when the foregoing first condition is met, and step 711 is not limited to be performed after step 710, and step 711 may be performed after step 702.

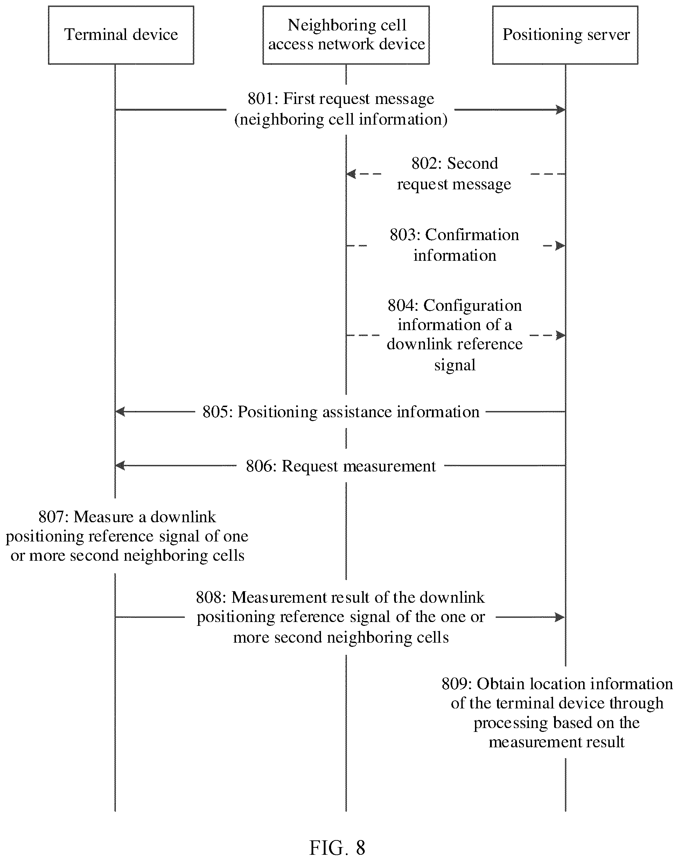

Based on FIG. 5 to FIG. 7, the method for determining, by the positioning server, the cell, the access network device, or the TRP that participates in measurement is described. The following describes another communication method according to an embodiment of this application by using FIG. 8. FIG. 8 is an example flowchart of a communication method according to an embodiment of this application. The method may include the following steps.

Step 801: A terminal device sends a first request message to a positioning server.

The first request message may be used to request positioning assistance information, and the first request message may be a request assistance data (request assistance data) message. The first request message may include neighboring cell information, where the neighboring cell information may include an identifier of one or more first neighboring cells and/or a measurement result of a measurement quantity corresponding to the first neighboring cell. The measurement result of the measurement quantity corresponding to the first neighboring cell may be a measurement result of a measurement quantity of RRM of the first neighboring cell. The measurement quantity may be reference signal received power (reference signal receiving power, RSRP) of a synchronization signal block (synchronization signal and PBCH block, SSB), reference signal received quality (reference signal receiving quality, RSRQ) of an SSB, RSRP of a channel state information-reference signal (channel state information-reference signal, CSI-RS), RSRQ of a CSI-RS, RSRP of a PRS, or RSRQ of a PRS. Optionally, the measurement quantity may further include a measurement quantity of another downlink signal, for example, a measurement quantity of a CRS. In addition, the measurement quantity may further include another measurement quantity of the downlink signal, for example, an SINR. This is not specifically limited in this application.

It should be noted that a first neighboring cell identified by the identifier of the first neighboring cell is a neighboring cell of the terminal device. For related descriptions of the neighboring cell information, refer to the descriptions in the method embodiments shown in FIG. 5 to FIG. 7. It should be understood that, in the method embodiments shown in FIG. 5 to FIG. 7, the neighboring cell information is reported by the serving access network device to the positioning server, and in step 801, the neighboring cell information is reported by the terminal device to the positioning server. Although the devices that report the neighboring cell information are different, content of the neighboring cell information may be the same.

Optionally, step 802 in which the positioning server sends a second request message to a neighboring cell access network device that manages one or more second neighboring cells may be performed.

The second request message may be a TRP information request (TRP information request) message, or may be another message. The second request message may be used to request an access network device to send a downlink positioning reference signal. The second request message may carry configuration information of a downlink positioning reference signal recommended by the positioning server. The one or more second neighboring cells may be some or all of the first neighboring cells indicated by the identifier of the one or more first neighboring cells. For details, refer to related descriptions in the method embodiment shown in FIG. 5. Optionally, the following step 803 may be performed, or the following step 804 may be performed.

Step 803: The neighboring cell access network device that manages the one or more second neighboring cells sends confirmation information to the positioning server.

The confirmation information is used to notify the positioning server that the access network device confirms to send the downlink positioning reference signal. In this case, it may be considered that the access network device sends the downlink positioning reference signal based on the configuration information of the downlink positioning reference signal recommended by the positioning server. The confirmation information may be included in a TRP information response (information response) message.

Step 804: The neighboring cell access network device that manages the one or more second neighboring cells sends the configuration information of a downlink reference signal to the positioning server.

The configuration information of the downlink reference signal may be determined by the neighboring cell access network device that manages the one or more second neighboring cells based on the recommendation of the positioning server, or may be determined by the neighboring cell access network device that manages the one or more second neighboring cells. The configuration information of the downlink reference signal may be included in the TRP information response (information response) message.

Step 805: The positioning server may send the positioning assistance information to the terminal device.

The positioning assistance information may include configuration information of a downlink positioning reference signal of the one or more second neighboring cells. The configuration information of the downlink positioning reference signal of the one or more second neighboring cells may be recommended by the positioning server to the neighboring cell access network device that manages the one or more second neighboring cells in step 802, or may be reported by the neighboring cell access network device that manages the one or more second neighboring cells to the positioning server in step 804.

The one or more second neighboring cells are some or all of the first neighboring cells indicated by the identifier of the one or more first neighboring cells. For a method for determining, by the positioning server, the one or more second neighboring cells from the one or more first neighboring cells, refer to the method 1 and the method 2 in the method embodiment shown in FIG. 5. Details are not described herein again.

The positioning server may send the positioning assistance information to the terminal device by using a provide assistance data (provide assistance data) message.

Based on the foregoing solution, the positioning server may determine the configuration information of the downlink positioning reference signal of the second neighboring cell for the terminal device based on neighboring cell information reported by the terminal device, so that the terminal device can measure a downlink positioning reference signal of an appropriate neighboring cell, thereby improving accuracy of a positioning result.

Optionally, the following step 806 to step 809 may be further performed.

Step 806: The positioning server requests measurement from the terminal device.

The positioning server may send a third request message to the terminal device, to request the terminal device to measure the downlink positioning reference signal. The foregoing third request message may be a request location information (request location information) message, or a 3GPP release 16 and a newly-defined message that does not appear before release 16.

Optionally, the positioning server may carry information about a third neighboring cell in the request location information. For example, the positioning server may carry an identifier of the third neighboring cell in the request location information. The third neighboring cell may be some or all of the foregoing one or more second neighboring cells. The information about the third neighboring cell may be used to indicate, to the terminal device, a measurement result of which neighboring cell is requested by the positioning server. It should be noted that, the positioning server may select one or more third neighboring cells from the one or more second neighboring cells, and for a method for selecting, by the positioning server, the third neighboring cell from the second neighboring cell, refer to the method for selecting the second neighboring cell from the first neighboring cell in the method 1 and the method 2 in the method embodiment shown in FIG. 5. For example, the positioning server may sort measurement results of measurement quantities of the one or more second neighboring cells in descending order, and select one or more top second neighboring cells as the third neighboring cell. It should be understood that, the method for selecting, by the positioning server, the foregoing one or more third neighboring cells from the one or more second neighboring cells is not limited to the foregoing method 1 and method 2, and another method may also be used to select the third neighboring cell from the second neighboring cell. A quantity of third neighboring cells selected by the positioning server should be greater than or equal to a minimum quantity of measurement cells that can complete positioning on the terminal device.

Step 807: The terminal device measures the downlink positioning reference signal of the one or more second neighboring cells based on the configuration information of the downlink positioning reference signal of the one or more second neighboring cells.

The terminal device may start measurement based on the request location information from the positioning server. The terminal device may receive the downlink positioning reference signal of the one or more second neighboring cells, to obtain a measurement result of the received downlink positioning reference signal. The measurement result may be a measured value of the measurement quantity described in the method embodiment shown in FIG. 5, or may be a quantized value of the measured value. For example, the measurement result may be a measured value of a time difference of arrival.

Optionally, if the third request message carries the information about the third neighboring cell, the terminal device may measure a downlink positioning reference signal of the third neighboring cell. The terminal device may receive the downlink positioning reference signal from the third neighboring cell based on configuration information of the downlink positioning reference signal of the third neighboring cell, and obtain a measurement result of the downlink positioning reference signal.

Based on the foregoing solution, the positioning server may add the information about the third neighboring cell to the third request message, so that the terminal device measures the downlink positioning reference signal of the third neighboring cell, and may further select an appropriate cell that participates in measurement. This can reduce a resource waste caused by an unnecessary cell participating in measurement, reduce a measurement time of the terminal device, and reduce a positioning delay.

Step 808: The terminal device sends a measurement result of the downlink positioning reference signal of the one or more second neighboring cells to the positioning server.

The terminal device may add the measurement result to a provide location information (provide location information) message, and report the measurement result of the downlink positioning reference signal of the one or more second neighboring cells to the positioning server.

Optionally, if the positioning request information carries the information about the third neighboring cell, the terminal device may add the measurement result of the downlink positioning reference signal of the third neighboring cell to a provide location information message, and report the provide location information message to the positioning server.

Step 809: The positioning server obtains location information of the terminal device through processing based on the measurement result.

The positioning server may determine the location information of the terminal device by using downlink positioning technologies such as DL-TDOA and DL-AOD. It should be understood that the positioning server may alternatively calculate the location information of the terminal device by using another positioning technology. This is not specifically limited in this application.

It should be understood that, in this embodiment of this application, all steps shown in FIG. 8 may be performed, or a person skilled in the art may select some steps from the steps shown in FIG. 8 to perform, to constitute a complete embodiment. For example, step 801 and step 805 may be selected from the steps shown in FIG. 8 to form a complete embodiment. Alternatively, step 802 and step 803 may be selected from the steps shown in FIG. 8 to form a complete embodiment. Details are not described herein again.

Based on the foregoing solution, the positioning server may select, based on the neighboring cell information reported by the terminal device, configuration information of a downlink positioning reference signal of an appropriate cell, and send the configuration information to the terminal device, so that the terminal device can measure the downlink positioning reference signal. This can improve positioning efficiency, and can also improve accuracy of a positioning result. In addition, the positioning server is avoided to send information about an unnecessary cell to the terminal device, so that network and air interface signaling resources are not occupied and wasted. In addition, the terminal device does not measure a downlink positioning reference signal of an unnecessary cell, so that power consumption of the terminal device is not wasted, and a latency is reduced.

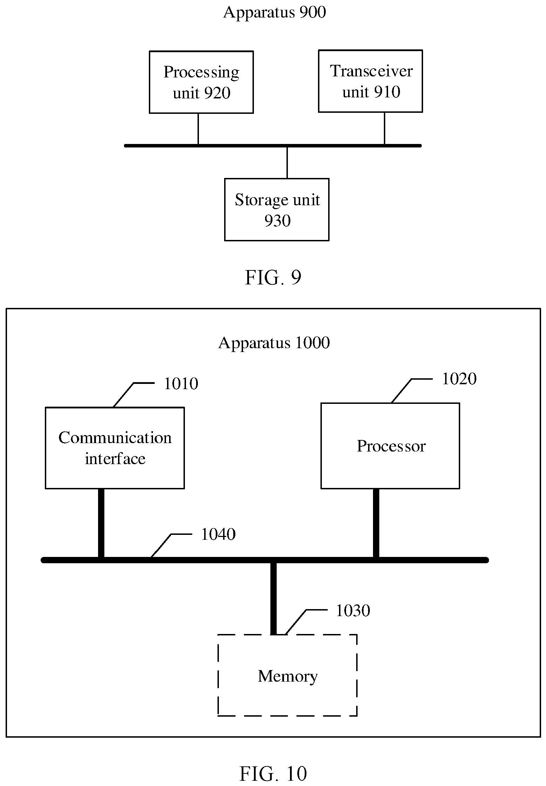

Based on the same technical idea as the foregoing communication method, as shown in FIG. 9, an apparatus 900 is provided. The apparatus 900 can perform steps performed by the network device side, the positioning server side, or the terminal device side in the foregoing method. To avoid repetition, details are not described herein again.

The apparatus 900 includes a transceiver unit 910, a processing unit 920, and optionally, further includes a storage unit 930. The processing unit 920 may be separately connected to the storage unit 930 and the transceiver unit 910, and the storage unit 930 may also be connected to the transceiver unit 910. The processing unit 920 may be integrated with the storage unit 930. The transceiver unit 910 may also be referred to as a transceiver, a transceiver machine, a transceiver apparatus, or the like. The processing unit 920 may also be referred to as a processor, a processing board, a processing module, a processing apparatus, or the like. Optionally, a component that is in the transceiver unit 910 and that is configured to implement a receiving function may be considered as a receiving unit, and a component that is in the transceiver unit 910 and that is configured to implement a sending function may be considered as a sending unit, in other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 910 is configured to perform the sending operation and the receiving operation on the network device side, the positioning server side, or the terminal device side in the foregoing method embodiments, and the processing unit 920 is configured to perform the operation other than the sending operation and the receiving operation on the network device side, the positioning server side, or the terminal device side in the foregoing method embodiments. For example, in an implementation, the transceiver unit 910 is configured to perform the sending operations on the network device side and/or the positioning server side in step 501 and step 502 in FIG. 5. In an implementation, the transceiver unit 910 is configured to perform the sending and receiving steps on the terminal device side and/or the positioning server in step 801, step 802, step 803, and step 805 in FIG. 8, and/or the transceiver unit 910 is further configured to perform other sending and receiving steps on the network device side, the positioning server side, or the terminal device side in embodiments of this application. The processing unit 920 is configured to perform the processing steps on the network device side, the positioning server side, or the terminal device side in the foregoing method embodiments. In an implementation, the processing unit 920 is configured to perform the processing steps on the terminal device side and/or the positioning server side in step 804 and step 806 shown in FIG. 8, and/or the processing unit 920 is configured to perform other processing steps on the network device side, the positioning server side, or the terminal device side in embodiments of this application.

The storage unit 930 is configured to store a computer program.

For example, when the apparatus 900 performs the steps performed by the network device in the foregoing method, the transceiver unit 910 is configured to receive a positioning information request from a positioning server; the processing unit 920 is configured to generate uplink positioning reference signal configuration information and neighboring cell information based on the positioning information request; and the transceiver unit 910 is configured to send the uplink positioning reference signal configuration information and the neighboring cell information. For the positioning information request and the neighboring cell information, refer to related descriptions in the method embodiments shown in FIG. 5 to FIG. 8. Details are not described herein again.

In a design, the transceiver unit 910 is further configured to send updated neighboring cell information to the positioning server. For the updated neighboring cell information, refer to related descriptions in the method embodiments shown in FIG. 5 to FIG. 8. Details are not described herein again.

In a design, when the transceiver unit 910 sends the updated neighboring cell information to the positioning server, the transceiver unit 910 is specifically configured to: when a first condition is met, send the updated neighboring cell information to the positioning server. For the first condition, refer to related descriptions in the method embodiments shown in FIG. 5 to FIG. 8. Details are not described herein again.

When the apparatus is a chip apparatus or circuit, the apparatus may include the transceiver unit 910 and the processing unit 920. The transceiver unit 910 may be an input/output circuit and/or a communication interface. The processing unit 920 is an integrated processor, a microprocessor, or an integrated circuit. The transceiver unit 910 may input data and output data, and the processing unit 920 may determine the output data based on the input data. For example, the transceiver unit 910 may input a positioning information request. The processing unit 920 may determine the output data, for example, generate uplink positioning reference signal configuration information and neighboring cell information based on the input data. The transceiver unit 910 may output data, for example, the uplink positioning reference signal configuration information and the neighboring cell information.

For example, when the apparatus 900 is configured to perform the steps performed by the positioning server, the processing unit 920 is configured to generate a positioning information request; the transceiver unit 910 is configured to send the positioning information request to a first network device; and the transceiver unit 910 is further configured to receive neighboring cell information from the first network device. For the positioning information request and the neighboring cell information, refer to related descriptions in the method embodiments shown in FIG. 5 to FIG. 8. Details are not described herein again.

In a design, the transceiver unit 910 is further configured to send a measurement request to a network device that manages one or more second neighboring cells. For the measurement request, refer to related descriptions in the method embodiments shown in FIG. 5 to FIG. 8. Details are not described herein again.

In a design, the transceiver unit 910 is further configured to receive updated neighboring cell information from the first network device; the processing unit 920 is further configured to generate a measurement request based on the updated neighboring cell information; and the transceiver unit 910 is further configured to send the measurement request to an updated network device that manages the one or more second neighboring cells. For the updated neighboring cell information, refer to related descriptions in the method embodiments shown in FIG. 5 to FIG. 8. Details are not described herein again.

When the apparatus is a chip apparatus or circuit, the apparatus may include the transceiver unit 910 and the processing unit 920. The transceiver unit 910 may be an input/output circuit and/or a communication interface. The processing unit 920 is an integrated processor, a microprocessor, or an integrated circuit. The transceiver unit 910 may input data and output data, and the processing unit 920 may determine the output data based on the input data. For example, the transceiver unit 910 may output a positioning information request, and input neighboring cell information. Optionally, the processing unit 920 may determine the output data, for example, a measurement request based on the input data.

For example, when the apparatus 900 is configured to perform the steps performed by the terminal device, the processing unit 920 is configured to generate a first request message; the transceiver unit 910 is configured to send the first request message to a positioning server; and the transceiver unit 910 is further configured to receive positioning assistance information from the positioning server. For the first request message, refer to related descriptions in the method embodiments shown in FIG. 5 to FIG. 8. Details are not described herein again.

In a design, the processing unit 920 is further configured to measure a downlink positioning reference signal of the one or more second neighboring cells based on configuration information of the downlink positioning reference signal of the one or more second neighboring cells; and the transceiver unit 910 is further configured to send a measurement result of the downlink positioning reference signal of the one or more second neighboring cells to the positioning server.

In a design, before the processing unit 920 measures the downlink positioning reference signal of the one or more second neighboring cells based on the configuration information of the downlink positioning reference signal of the one or more second neighboring cells, the transceiver unit 910 is further configured to receive a third request message from the positioning server. For the third request message, refer to related descriptions in the method embodiments shown in FIG. 5 to FIG. 8. Details are not described herein again. When the processing unit 920 measures the downlink positioning reference signal of the one or more second neighboring cells based on the configuration information of the downlink positioning reference signal of the one or more second neighboring cells, the processing unit 920 is specifically configured to measure a downlink positioning reference signal of the one or more third neighboring cells based on configuration information of a downlink reference signal of the one or more third neighboring cells; and when the transceiver unit 910 sends a measurement result of the downlink positioning reference signal of the one or more second neighboring cells to the positioning server, the transceiver unit 910 is specifically configured to send a measurement result of the downlink positioning reference signal of the one or more third neighboring cells to the positioning server.

When the apparatus is a chip apparatus or circuit, the apparatus may include the transceiver unit 910 and the processing unit 920. The transceiver unit 910 may be an input/output circuit and/or a communication interface. The processing unit 920 is an integrated processor, a microprocessor, or an integrated circuit. The transceiver unit 910 may input data and output data, and the processing unit 920 may determine the output data based on the input data. For example, the transceiver unit 910 may output a first request message, and input positioning assistance information. Optionally, the processing unit 920 may determine the output data, for example, a measurement result of a downlink positioning reference signal based on the input data.

For example, when the apparatus 900 is configured to perform the steps performed by the positioning server, the transceiver unit 910 is configured to receive a first request message from a terminal device; the processing unit 920 is configured to generate positioning assistance information based on the first request message; and the transceiver unit 910 is further configured to send the positioning assistance information to the terminal device. For the first request message and the positioning assistance information, refer to related descriptions in the method embodiments shown in FIG. 5 to FIG. 8. Details are not described herein again.

In a design, the transceiver unit 910 is further configured to send a second request message to a network device that manages the one or more second neighboring cells. For the second request message, refer to related descriptions in the method embodiments shown in FIG. 5 to FIG. 8. Details are not described herein again.

In a design, the transceiver unit 910 is further configured to send information about one or more third neighboring cells to the terminal device, where the one or more third neighboring cells are some or all of the one or more second neighboring cells; and receive a measurement result of a downlink positioning reference signal of the one or more third neighboring cells from the terminal device.

When the apparatus is a chip apparatus or circuit, the apparatus may include the transceiver unit 910 and the processing unit 920. The transceiver unit 910 may be an input/output circuit and/or a communication interface. The processing unit 920 is an integrated processor, a microprocessor, or an integrated circuit. The transceiver unit 910 may input data and output data, and the processing unit 920 may determine the output data based on the input data. For example, the transceiver unit 910 may input a first request message. The processing unit 920 may determine the output data, for example, positioning assistance information based on the input data.

FIG. 10 shows an apparatus 1000 according to an embodiment of this application. The apparatus 1000 is configured to implement functions of the network device side, the terminal device side, and/or the positioning server side in the foregoing method. When the apparatus is configured to implement the function of the network device side in the foregoing method, the apparatus may be a network device, a chip with similar functions in the network device, or an apparatus that can be used in matching with the network device. When the apparatus is configured to implement the function of the terminal device in the foregoing method, the apparatus may be a terminal device, a chip with similar functions in the terminal device, or an apparatus that can be used in matching with the terminal device. When the apparatus is configured to implement the function of the positioning server in the foregoing method, the apparatus may be a positioning server, may be a chip with similar functions in the positioning server, or may be an apparatus that can be used in a matching manner with the positioning server.

The apparatus 1000 includes at least one processor 1020, configured to implement the functions on the network device side, the terminal device side, and/or the positioning server side in the method provided in embodiments of this application. The apparatus 1000 may further include a communication interface 1010. In this embodiment of this application, the communication interface may be a transceiver, a circuit, a bus, a module, or a communication interface of another type, and is configured to communicate with another device by using a transmission medium. For example, the communication interface 1010 is used for an apparatus in the apparatus 1000 to communicate with another device. The processor 1020 may complete the function of the processing unit 920 shown in FIG. 9, and the communication interface 1010 may complete the function of the transceiver unit 910 shown in FIG. 9.

The apparatus 1000 may further include at least one memory 1030, configured to store program instructions and/or data. The memory 1030 is coupled to a processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

A specific connection medium between the communication interface 1010, the processor 1020, and the memory 1030 is not limited in this embodiment of this application. In this embodiment of this application, the memory 1030, the processor 1020, and the communication interface 1010 are connected to each other through a bus 1040 in FIG. 10. The bus is represented by using a thick line in FIG. 10. A connection manner between other components is merely an example for descriptions, and is not limited thereto. The bus may be classified into an address bus, a data bus, a control bus, and the like. For ease of representation, only one thick line is for representing the bus in FIG. 10, but this does not mean that there is only one bus or only one type of bus.

In another form of this embodiment, a computer-readable storage medium is provided, where the computer-readable storage medium stores instructions. When the instructions are executed, the method on the network device side, the terminal device side, and/or the positioning server side in the foregoing method embodiments is performed.

In another form of this embodiment, a computer program product including instructions is provided. When the instructions are executed by an electronic apparatus (for example, a computer, a processor, or an apparatus installed with a processor), the electronic apparatus is enabled to perform the method on the network device side, the terminal device side, and/or the positioning server side in the foregoing method embodiments.

In another form of this embodiment, a communication system is provided. The system may include at least one network device and the positioning server side.

It should be understood that the processor mentioned in embodiments of the present invention may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a network device, a positioning information request from a positioning server, wherein the positioning information request is used to request the network device to configure uplink positioning reference signal configuration information for a terminal device; and
sending, by the network device, the uplink positioning reference signal configuration information and neighboring cell information to the positioning server, wherein the positioning cell information comprises an identifier of one or more first neighboring cells and/or a measurement result of a measurement quantity corresponding to the one or more first neighboring cells, and the first neighboring cell is a neighboring cell of the terminal device.

2. The method according to claim 1, wherein the measurement result of the measurement quantity corresponding to the first neighboring cell is greater than or equal to a first threshold.

3. The method according to claim 1 or 2, further comprising:
sending, by the network device, updated neighboring cell information to the positioning server.

4. The method according to claim 3, wherein the sending, by the network device, updated neighboring cell information to the positioning server comprises:
when a first condition is met, sending, by the network device, the updated neighboring cell information to the positioning server, wherein
the first condition comprises at least one of the following:
a measurement result of a measurement quantity corresponding to at least one of the one or more first neighboring cells changes, a change of a measurement result of a measurement quantity corresponding to at least one of the one or more first neighboring cells is greater than or equal to a second threshold, the neighboring cell of the terminal device changes, the uplink positioning reference signal configuration information of the terminal device changes, or a measurement result of a measurement quantity corresponding to at least one of the one or more first neighboring cells is less than a third threshold.

5. The method according to any one of claims 1 to 4, wherein the positioning information request comprises first information, and the first information is used to request the network device to report the neighboring cell information of the terminal device.

6. A communication method, comprising:
sending, by a positioning server, a positioning information request to a first network device, wherein the positioning information request is used to request the network device to configure uplink positioning reference signal configuration information for a terminal device; and
receiving, by the positioning server, neighboring cell information from the first network device, wherein the neighboring cell information comprises an identifier of one or more first neighboring cells and/or a measurement result of a measurement quantity corresponding to the one or more first neighboring cells, and the first neighboring cell is a neighboring cell of the terminal device.

7. The method according to claim 6, wherein the measurement result of the measurement quantity corresponding to the first neighboring cell is greater than or equal to a first threshold.

8. The method according to claim 6 or 7, further comprising:
sending, by the positioning server, a measurement request to a network device that manages one or more second neighboring cells, wherein the measurement request is used to request the network device that manages the one or more second neighboring cells to receive an uplink reference signal of the terminal device, and the one or more second neighboring cells are some or all of the one or more first neighboring cells.

9. The method according to claim 8, wherein a measurement result of a measurement quantity of the one or more second neighboring cells is greater than or equal to a fourth threshold.

10. The method according to any one of claims 6 to 9, further comprising:
receiving, by the positioning server, updated neighboring cell information from the first network device; and
sending, by the positioning server based on the updated neighboring cell information, a measurement request to an updated network device that manages the one or more second neighboring cells.

11. The method according to any one of claims 6 to 10, wherein the positioning information request comprises first information, and the first information is used to request the first network device to report the neighboring cell information of the terminal device.

12. A communication method, comprising:
sending, by a terminal device, a first request message to a positioning server, wherein the first request message is used to request positioning assistance information, the first request message comprises neighboring cell information, the neighboring cell information comprises an identifier of one or more first neighboring cells and/or a measurement result of a measurement quantity corresponding to the one or more first neighboring cells, and the first neighboring cell is a neighboring cell of the terminal device; and
receiving, by the terminal device, the positioning assistance information from the positioning server, wherein the positioning assistance information comprises configuration information of a downlink positioning reference signal of one or more second neighboring cells, and the one or more second neighboring cells are some or all of the one or more first neighboring cells.

13. The method according to claim 12, wherein the measurement result of the measurement quantity corresponding to the first neighboring cell is greater than or equal to a first threshold.

14. The method according to claim 12 or 13, wherein a measurement result that is of a measurement quantity of the one or more second neighboring cells and that is comprised in the positioning assistance information is greater than or equal to a second threshold.

15. The method according to any one of claims 12 to 14, further comprising:
measuring, by the terminal device, the downlink positioning reference signal of the one or more second neighboring cells based on the configuration information of the downlink positioning reference signal of the one or more second neighboring cells; and
sending, by the terminal device, a measurement result of the downlink positioning reference signal of the one or more second neighboring cells to the positioning server.

16. The method according to claim 15, wherein before the measuring, by the terminal device, the downlink positioning reference signal of the one or more second neighboring cells based on the configuration information of the downlink positioning reference signal of the one or more second neighboring cells, the method further comprises:
receiving, by the terminal device, a third request message from the positioning server, wherein the third request message is used to request the terminal device to perform measurement, the third request message comprises information about one or more third neighboring cells, and the one or more third neighboring cells are some or all of the one or more second neighboring cells;
the measuring, by the terminal device, the downlink positioning reference signal of the one or more second neighboring cells based on the configuration information of the downlink positioning reference signal of the one or more second neighboring cells comprises:
measuring, by the terminal device, a downlink positioning reference signal of the one or more third neighboring cells based on configuration information of a downlink reference signal of the one or more third neighboring cells; and
the sending, by the terminal device, a measurement result of the downlink positioning reference signal of the one or more second neighboring cells to the positioning server comprises:
sending, by the terminal device, a measurement result of the downlink positioning reference signals of the one or more third neighboring cells to the positioning server.

17. A communication method, comprising:
receiving, by a positioning server, a first request message from a terminal device, wherein the first request message is used to request positioning assistance information, the first request message comprises neighboring cell information, the neighboring cell information comprises an identifier of one or more first neighboring cells and/or a measurement result of a measurement quantity corresponding to the one or more first neighboring cells, and the first neighboring cell is a neighboring cell of the terminal device; and
sending, by the positioning server, the positioning assistance information to the terminal device, wherein the positioning assistance information comprises configuration information of a downlink positioning reference signal of one or more second neighboring cells, and the one or more second neighboring cells are some or all of the one or more first neighboring cells.

18. The method according to claim 17, wherein the measurement result of the measurement quantity corresponding to the first neighboring cell is greater than or equal to a first threshold.

19. The method according to claim 17 or 18, wherein a measurement result of a measurement quantity of the one or more second neighboring cells comprised in the downlink positioning assistance information is greater than or equal to a second threshold.

20. The method according to any one of claims 17 to 19, further comprising:
sending, by the positioning server, a second request message to a network device that manages the one or more second neighboring cells, wherein the second request message is used to request the network device that manages the one or more second neighboring cells to send a downlink positioning reference signal.

21. The method according to any one of claims 17 to 20, further comprising:
sending, by the positioning server, information about one or more third neighboring cells to the terminal device, wherein the one or more third neighboring cells are some or all of the one or more second neighboring cells; and
receiving, by the positioning server, a measurement result of a downlink positioning reference signal of the one or more third neighboring cells from the terminal device.

22. A communication apparatus, comprising a processing unit and a transceiver unit, wherein
the transceiver unit is configured to receive a positioning information request from a positioning server, wherein the positioning information request is used to request a network device to configure uplink positioning reference signal configuration information for a terminal device;
the processing unit is configured to generate the uplink positioning reference signal configuration information and neighboring cell information based on the positioning information request, wherein the positioning cell information comprises an identifier of one or more first neighboring cells and/or a measurement result of a measurement quantity corresponding to the one or more first neighboring cells, and the first neighboring cell is a neighboring cell of the terminal device; and
the transceiver unit is configured to send the uplink positioning reference signal configuration information and the neighboring cell information.

23. A communication apparatus, comprising a processing unit and a transceiver unit, wherein
the processing unit is configured to generate a positioning information request, wherein the positioning information request is used to request a network device to configure uplink positioning reference signal configuration information for a terminal device;
the transceiver unit is configured to send the positioning information request to a first network device; and
the transceiver unit is further configured to receive neighboring cell information from the first network device, wherein the neighboring cell information comprises an identifier of one or more first neighboring cells and/or a measurement result of a measurement quantity corresponding to the one or more first neighboring cells, and the first neighboring cell is a neighboring cell of the terminal device.

24. A communication apparatus, comprising a processing unit and a transceiver unit, wherein
the processing unit is configured to generate a first request message, wherein the first request message is used to request positioning assistance information, the first request message comprises neighboring cell information, the neighboring cell information comprises an identifier of one or more first neighboring cells and/or a measurement result of a measurement quantity corresponding to the one or more first neighboring cells, and the first neighboring cell is a neighboring cell of a terminal device;
the transceiver unit is configured to send the first request message to a positioning server; and
the transceiver unit is further configured to receive the positioning assistance information from the positioning server, wherein the positioning assistance information comprises configuration information of a downlink positioning reference signal of one or more second neighboring cells, and the one or more second neighboring cells are some or all of the one or more first neighboring cells.

25. A communication apparatus, comprising a processing unit and a transceiver unit, wherein
the transceiver unit is configured to receive a first request message from a terminal device, wherein the first request message is used to request positioning assistance information, the first request message comprises neighboring cell information, the neighboring cell information comprises an identifier of one or more first neighboring cells and/or a measurement result of a measurement quantity corresponding to the one or more first neighboring cells, and the first neighboring cell is a neighboring cell of the terminal device;
the processing unit is configured to generate the positioning assistance information based on the first request message, wherein the positioning assistance information comprises configuration information of a downlink positioning reference signal of one or more second neighboring cells, and the one or more second neighboring cells are some or all of the one or more first neighboring cells; and
the transceiver unit is further configured to send the positioning assistance information to the terminal device.

26. A communication apparatus, comprising a processor and a memory, wherein
the memory is configured to store a computer program or instructions; and
the processor is configured to execute the computer program or the instructions in the memory, so that the method according to any one of claims 1 to 5, the method according to any one of claims 6 to 11, the method according to any one of claims 12 to 16, or the method according to any one of claims 17 to 21 is performed.

27. A computer-readable storage medium, wherein the computer-readable storage medium stores computer-executable instructions, and when the computer-executable instructions are invoked by a computer, the computer is enabled to perform the method according to any one of claims 1 to 5, the method according to any one of claims 6 to 11, the method according to any one of claims 12 to 16, or the method according to any one of claims 17 to 21.
